# EUROPEAN PATENT APPLICATION

(11) **EP 2 085 663 A2**
(43) Date of publication of application: **05.08.2009**
(21) Application number: 09151542.9
(22) Date of filing: 28.01.2009
(51) Int. Cl.: F16H 63/02, F16H 63/10, F16H 63/30

(54) **Speed ratio change operation device, and transmission**

(30) Priority: 29.01.2008 JP 2008017726
(71) Applicant: Toyota Jidosha Kabushiki Kaisha, Toyota-shi, Aichi-ken, 471-8571 (JP)
(72) Inventor: Nagai, Kazunari, Toyota-shi, Aichi 471-8571 (JP); Naito, Koji, Toyota-shi, Aichi 471-8571 (JP)
(74) Representative: TBK-Patent

(57) **Abstract**

A speed ratio change operation device includes: a case (101); a shift select lever (103) housed in the case (101) and provided slidably in a direction of an axis and rotatably in a circumferential direction; a speed ratio change operating lever (250) that operates the shift select lever (103); a select-purpose cam (160) that is fixed to the shift select lever (103) and rotates about the shift select lever (103); a lock ball (150) that presses the select-purpose cam (160); and a bevel portion (163, 164) that is formed in an end portion of a press surface (162, 163, 164) of the select-purpose cam (160) which is pressed by the lock ball (150), the end portion being positioned in a shift displacement direction in which the shift select lever (103) is displaced at the time of a shift operation. The bevel portion is inclined so that a point on the bevel portion approaches the shift select lever (103) as the point is moved in the shift displacement direction. Thus, the operation feeling of the shift operation can be improved.

## Description

### BACKGROUND OF THE INVENTION

### 1. Field of the Invention

The invention relates to a speed ratio change operation device, and a transmission. More particularly, the invention relates to a speed ratio change operation device for a manual transmission, and a manual transmission that includes the speed ratio change operation device.

### 2. Description of the Related Art

Various manual transmissions have been proposed. For example, Japanese Patent Application Publication No. 11-294582 (JP-A-11-294582) proposes a speed ratio change operation device that restrains the occurrence of a wrench or twist between a shift fork and a fork shaft at the time of a select operation through the use of an operating lever. This speed ratio change operation device includes the fork shaft, a housing shift lever fitted and fixed to the fork shaft, a groove portion formed in an end surface of the housing shift lever, and a pin that restricts the action of the fork shaft in the select directions.

In addition, a speed ratio change operation mechanism of a manual transmission described in Japanese Patent Application Publication No. 2005-90710 (JP-A-2005-90710) includes a shift select shaft that is rotatable by a select operation with a speed ratio change operation member and is also movable in the direction of an axis by a shift operation of a speed ratio change operation member, and a plurality of shift forks for forward travel speed change steps which are attached to the shift select shaft so as to be relatively rotatable and axially movable. In this speed ratio change operation mechanism, the take-up space of the speed ratio change operation mechanism is lessened, and the number of component parts is reduced.

However, in the foregoing speed ratio change operation device and the speed ratio change operation mechanism of the related art, no consideration is given regarding the operation feeling at the time of shift operation.

### SUMMARY OF THE INVENTION

The invention has been accomplished in view of the foregoing circumstances. It is an object of the invention to provide a speed ratio change operation device and a transmission in which the operation feeling at the time of shift operation is improved.

A speed ratio change operation device in accordance with the invention includes: a case; a shift select lever that is housed in the case and that is provided slidably in a direction of an axis and that is provided rotatably in a circumferential direction; an operation portion that operates the shift select lever; a cam member that is fixed to the shift select lever and that rotates about the shift select lever; a press portion that presses the cam member; and a bevel portion that is formed in an end portion of a pressed surface of the cam member which is pressed by the press portion, the end portion being positioned in a shift displacement direction in which the shift select lever is displaced at a time of a shift operation, the bevel portion being inclined so that a point on the bevel portion approaches the shift select lever as the point is moved in the shift displacement direction. Preferably, the shift select lever is displaced in a direction of an axis of the shift select lever at the time of the shift operation, and the bevel portion is formed in the end portion of the pressed surface which is positioned in the direction of the axis of the shift select lever.

Preferably, the bevel portion extends in a circumferential direction of the shift select lever. Preferably, the bevel portion is provided at each of a plurality of locations that are spaced from each other in the circumferential direction of the shift select lever. Preferably, the pressed surface includes a recess portion that holds the press portion during a neutral state, and, of the plurality of bevel portions, a bevel portion formed with a deviation from the recess portion in the circumferential direction of the shift select lever is inclined so that a point on the bevel portion approaches the shift select lever as the point is moved in the circumferential direction from the recess portion The bevel portion may include a flat surface, or may also include a curved surface. Besides, preferably, the pressed surface includes a recess portion that holds the press portion during a neutral state, and a portion of the pressed surface which is adjacent to the recess portion in a select direction in which the shift select lever is displaced at a time of a select operation is a curved surface that is curved so that a point on the curved portion becomes further apart from the shift select lever as the point is moved from the recess portion in the select direction. A transmission in accordance with the invention includes the foregoing speed ratio change operation device.

The speed ratio change operation device and the transmission in accordance with the invention can improve the operation feeling at the time of shift operation.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a sectional view of a speed ratio change operation device in accordance with Embodiment 1 of the invention;
FIG. 2 is a sectional view taken on line II-II shown in FIG. 1;
FIG. 3 is a sectional view taken on line III-III shown in FIG. 1;
FIG. 4 is a sectional view taken on line IV-IV shown in FIG. 1, and FIG. 4 is a sectional view in a neutral state;
FIG. 5 is a sectional view taken on line V-V shown in FIG. 1;
FIG. 6 is a plan view of a select-purpose cam 160;
FIG 7 is a sectional view taken on line VII-VII of FIG. 6;
FIG. 8 is a sectional view taken on line VIII-VIII of FIG 6;
FIG. 9 is a perspective view of an upper end portion of the select-purpose cam 160;
FIG. 10 is a sectional view of an engagement portion and its vicinity in a state in which the engagement portion has moved from a state shown in FIG. 4 to the side of the first speed change step and the second speed change step in a select direction;
FIG. 11 is a plan view of the select-purpose cam during the state shown in FIG. 10;
FIG. 12 is a sectional view taken on line XII-XII of FIG. 11;
FIG. 13 is a sectional view of the engagement portion and its surroundings when the engagement portion has been shifted from the state shown in FIG. 10 toward the first speed change step;
FIG. 14 is a plan view of the select-purpose cam in the state shown in FIG. 13;
FIG. 15 is a sectional view taken on line XV-XV shown in FIG. 14;
FIG. 16 is a sectional view of the engagement portion and its surroundings when the engagement portion has been shifted from the state shown in FIG. 10 toward the second speed change step;
FIG. 17 is a plan view of the select-purpose cam in a state shown in FIG. 16;
FIG. 18 is a sectional view taken on line XVIII-XVIII shown in FIG. 17;
FIG 19 is a sectional view of the engagement portion and its surroundings when the engagement portion has been shifted from the state shown in FIG. 4 to the third speed change step.
FIG. 20 is a plan view of the select-purpose cam when the select-purpose cam 160 has been shifted from the state shown in FIG. 6 toward the third speed change step;
FIG. 21 is a sectional view of the engagement portion and its surroundings when the engagement portion has been shifted from the state shown in FIG. 4 toward the fourth speed change step;
FIG. 22 is a plan view of the select-purpose cam when the select-purpose cam has been shifted from the state shown in FIG. 6 toward the fourth speed change step;
FIG. 23 is a sectional view of the engagement portion and its surrounding portions when the engagement portion has been shifted toward the fifth speed change step;
FIG. 24 is a plan view of the select-purpose cam when the select-purpose cam has been shifted toward the fifth speed change step;
FIG. 25 is a sectional view of the engagement portion and its surroundings when the engagement portion has been shifted toward the sixth speed change step;
FIG. 26 is a plan view of the select-purpose cam when the select-purpose cam has been shifted toward the sixth speed change step;
FIG. 27 is a plan view of the select-purpose cam when the reverse travel speed step has been selected;
FIG. 28 is a perspective view showing an upper portion of a select-purpose cam that is provided in a speed ratio change operation mechanism in accordance with Embodiment 2 of the invention;
FIG. 29 is a schematic diagram showing an inclined state of a fifth-speed bevel surface shown in FIG. 28;
FIG. 30 is a sectional view taken on line XXX-XXX shown in FIG. 29;
FIG. 31 is a schematic diagram showing an inclined state of a third-speed bevel surface shown in FIG. 28;
FIG. 32 is a sectional view taken on line XXXII-XXXII shown in FIG. 31;
FIG. 33 is a schematic diagram showing an inclined state of a first-speed bevel surface shown in FIG. 28;
FIG. 34 is a sectional view taken on line XXXIV-XXXIV of FIG. 33;
FIG. 35 is a schematic diagram showing an inclined state of a sixth-speed bevel surface shown in FIG. 28;
FIG. 36 is a sectional view taken on line XXXVI-XXXVI shown in FIG. 35;
FIG. 37 is a schematic diagram showing an inclined state of a fourth-speed bevel surface shown in FIG. 28;
FIG 38 is a sectional view taken on line XXXVIII-XXXVIII shown in FIG. 37;
FIG. 39 is a schematic diagram showing an inclined state of a second-speed bevel surface shown in FIG. 28;
FIG. 40 is a sectional view taken on line XL-XL shown in FIG. 39;
FIG. 41 is a perspective view showing an upper portion of a select-purpose cam that is provided in a transmission in accordance with Embodiment 3 of the invention;
FIG. 42 is an enlarged perspective view of a third-speed curved surface;
FIG. 43 is a sectional view of a manual transmission in accordance with Embodiment 4 of the invention;
FIG. 44 is a sectional view taken along line XLIV-XLIV in FIG. 43;
FIG. 45 is a sectional view of a transmission linked to fork shafts in Embodiment 4;
FIG. 46 is a schematic diagram of a reverse gear viewed in a direction shown by an arrow XLVI in FIG. 45;
FIG. 47 is a plan view of a first inner lever in Embodiment 4;
FIG. 48 is a sectional view taken on line XLVIII-XLVIII shown in FIG. 47;
FIG. 49 is a sectional view of the first inner lever and a shift select lever after the first inner lever and a shift select lever are rotated in a shift direction from the state shown in FIG. 48;
FIG. 50 is a sectional view of the shift select lever and the first inner lever after the shift select lever and the first inner lever are rotated in a shift direction from the state shown in FIG 48;
FIG. 51 is a sectional view of an interlock plate and the first inner lever at the time of the shift to the first speed change step in Embodiment 4;
FIG. 52 is a sectional view of the interlock plate and the first inner lever at the time of the shift to the second speed change step in Embodiment 4;
FIG. 53 is a sectional view of the interlock plate and the first inner lever at the time of the shift to the third speed change step in Embodiment 4;
FIG. 54 is a sectional view of the interlock plate and the first inner lever at the time of the shift to the fourth speed change step in Embodiment 4;
FIG. 55 is a sectional view of the interlock plate and the first inner lever at the time of the shift to the fifth speed change step in Embodiment 4; and
FIG. 56 is a sectional view of the interlock plate and the first inner lever in a state where the shift to the reverse speed has been completed.

### DETAILED DESCRIPTION OF EMBODIMENTS

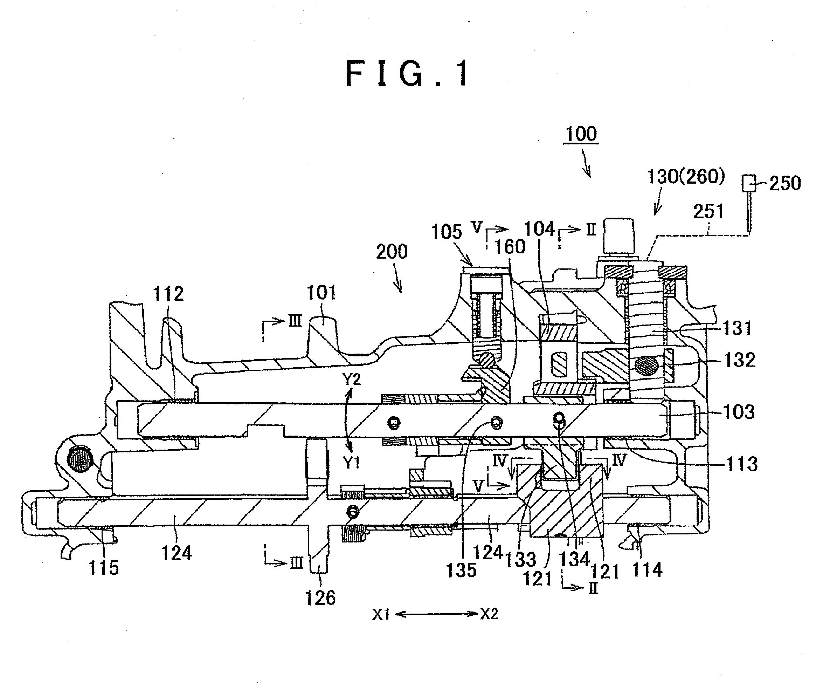

Speed ratio change operation devices and transmissions equipped with the speed ratio change operation devices in accordance with embodiments of the invention will be described with reference to FIGS. 1 to 56.

When numbers, quantities, etc. are mentioned in conjunction with the embodiments described below, those numbers, quantities, etc. do no necessarily limit the scope of the invention, unless otherwise stated. Besides, various component elements of the following embodiments are not necessarily essential to the invention, unless otherwise stated. Besides, as for a plurality of embodiments presented below, appropriate combinations of feature portions of two or more of the embodiments are conceived or planned from the beginning, unless otherwise stated.

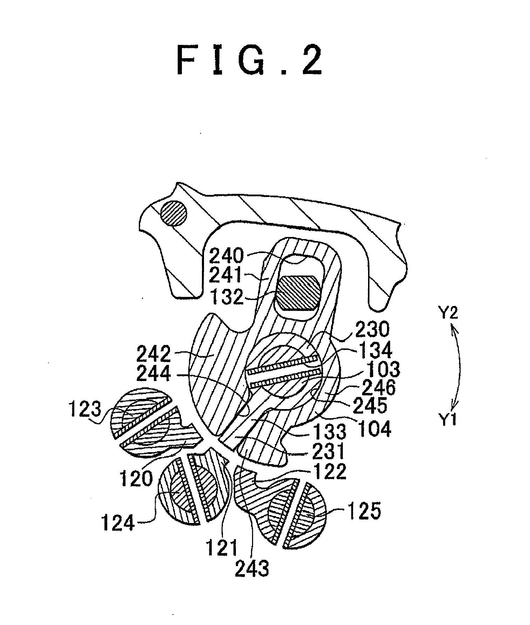

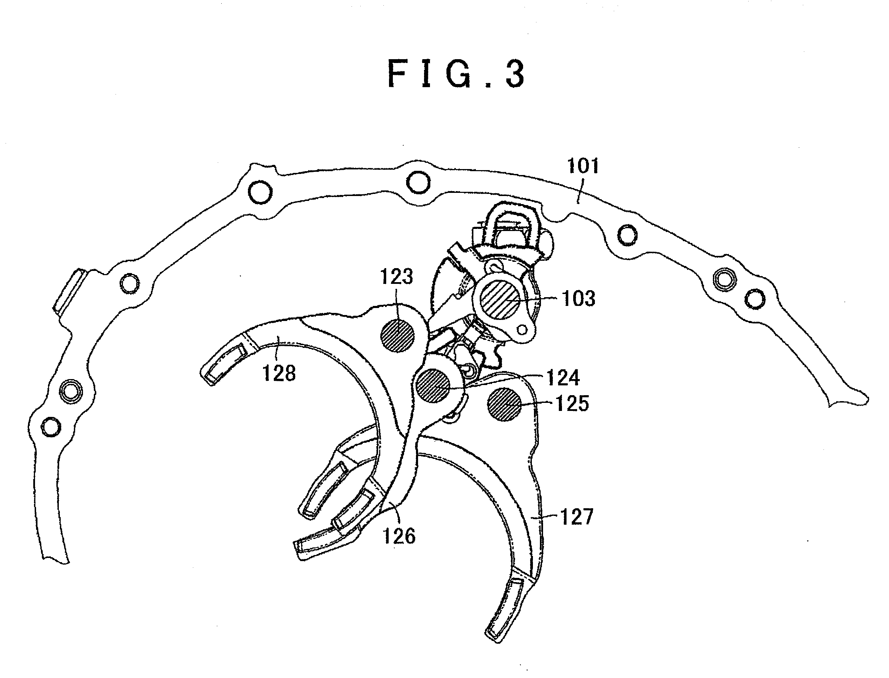

FIG. 1 is a sectional view of a speed ratio change operation device in accordance with Embodiment 1 of the invention. FIG. 2 is a sectional view taken on line II-II shown in FIG. 1. Furthermore, FIG. 3 is a sectional view taken on line III-III shown in FIG. 1. As shown in FIGS. 1 ad 2, a transmission 100 is provided with a gear train that includes a plurality of gears, a speed ratio change operation mechanism 200 that is operable by a driver and that is able to switch the speed change ratio by switching the state of engagement of the gear train, and a transmission case 101 that houses the gear train and the speed ratio change operation mechanism 200.

The speed ratio change operation mechanism 200 includes a speed ratio change operating lever 250 that is operated by the driver, a shift select lever 103 provided within the transmission case 101, and fork shafts 123, 124, 125 that are disposed apart from the shift select lever 103.

The shift select lever 103 is supported by bushes (bearings) 112, 113 so as to be rotatable and slidable in the direction of an axis.

As shown in FIGS. 1 and 2, the fork shafts 123, 124, 125 are disposed in parallel with the shift select lever 103, and are each supported on the transmission case 101 so as to be displaceable in the direction of the axis.

As shown in FIG. 3, the fork shaft 125 is provided with a shift fork 127 that displaces, in the direction of an axis of a main shaft, a sleeve of a first and second-speed synchronization mechanism that is provided in the gear train. Besides, the fork shaft 124 is provided with a shift fork 126 that displaces, in the direction of the axis of the main shaft, a sleeve of a third and fourth-speed synchronization mechanism that is provided in the gear train. The fork shaft 123 is provided with a shift fork 128 that displaces, in the direction of the axis of the main shaft, a sleeve of a fifth and sixth-speed synchronization mechanism that is provided in the gear train.

By the shift fork 127 moving the sleeve of the first and second-speed synchronization mechanism, a shift to a first speed change step or a second speed change step can be performed. Besides, by the shift fork 126 moving the sleeve of the third and fourth-speed synchronization mechanism, a shift to a third speed change step or a fourth speed change step can be performed. By the shift fork 128 moving the sleeve of the fifth and sixth-speed synchronization mechanism, a shift to a fifth speed change step or a sixth speed change step can be performed.

The speed ratio change operation mechanism 200 includes a select operation mechanism 130 that transmits the operating force applied to the speed ratio change operating lever 250 in a select direction, to the fork shafts 123, 124, 125 via the shift select lever 103, and a shift operation mechanism (not shown) that transmits the operating force applied to the speed ratio change operating lever 250 in a shift direction, to the fork shafts 123, 124, 125 via the shift select lever 103.

When the speed ratio change operating lever 250 is operated in a select direction, the select operation mechanism 130 is driven to rotate the shift select lever 103 in a circumferential direction of the shift select lever 103.

In FIG. 1, the select operation mechanism 130 includes: a rotating shaft 131 that is rotatably provided in the transmission case 101 and is capable of being rotated by power from the speed ratio change operating lever 250; a link mechanism 251 that transmits the operating force in the select direction transmitted from the speed ratio change operating lever 250, to the rotating shaft 131; an inner shaft 132 fixed to an end portion of the rotating shaft 131, and extending in a radial direction of the rotating shaft 131; an interlock plate 104 rotatably provided on the shift select lever 103 so as to engage with a distal end portion of the inner shaft 132; and an inner lever 133 fixed to the shift select lever 103.

As shown in FIG. 2, the interlock plate 104 has an engagement portion 241 that defines an engagement hole 240 capable of receiving therein a distal end portion of the inner shaft 132, a tube portion 246 that defines a penetration hole 245 that receives therein the' inner lever 133, and a guide portion 242 and a guide portion 243 that define the moving direction of the inner lever 133.

The interlock plate 104 is provided rotatably relative to the shift select lever 103, in the circumferential direction of the shift select lever 103.

The inner lever 133 has a tube portion 230 that defines a hole capable of receiving therein the shift select lever 103, and an engagement portion 231 that is provided continuously from the tube portion 230 and that extends in a radial direction of the shift select lever 103.

The guide portion 242 and guide portion 243 are positioned on two opposite sides of the engagement portion 231. Therefore, the engagement portion 231 is restricted by the guide portion 242 and the guide portion 243 so as to be slidable in the direction of the axis of the shift select lever 103 through a space that extends in the direction of the axis of the shift select lever 103. In addition, the inner lever 133 is fixed to the shift select lever 103 by a slotted pin 134, and is therefore displaced together with the shift select lever 103 in the rotational and axial directions.

The engagement portion 231 of the inner lever 133 is enagageable with groove portions of shift heads 120, 121, 122 that are fixed to the fork shafts 123, 124, 125.

In the select operation mechanism 130, as the driver operates the speed ratio change operating lever 250 in the select direction, the rotating shaft 131 rotates, with the distal end portion of the inner shaft 132 rotating about the rotating shaft 131. In association with this movement, the interlock plate 104 rotates in a circumferential direction of the shift select lever 103. Therefore, the inner lever 133, pressed by the interlock plate 104, rotates in the circumferential direction of the shift select lever 103.

Due to the rotation of the shift select lever 103, the engagement portion 231 of the inner lever 133 is positioned so as to be engageable with one of the shift heads 120, 121, 122. Thus, a selection operation is performed.

As the speed ratio change operating lever 250 is operated in a shift direction, the shift operation mechanism is driven to displace the shift select lever 103 in the direction of the axis of the shift select lever 103, displacing one of the shift heads 120, 121, 122 that engages with the engagement portion 231, together with a corresponding one of the fork shafts 123, 124, 125, in the direction of the axes of the fork shafts 123, 124, 125.

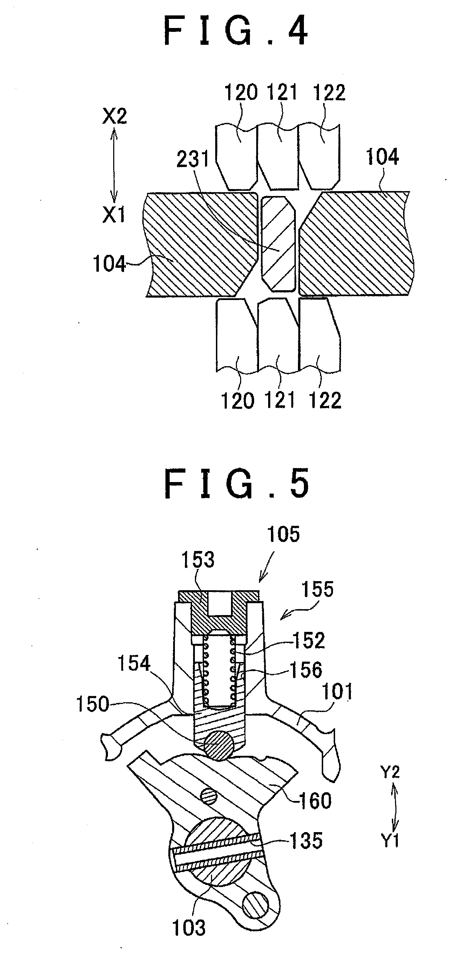

FIG. 4 is a sectional view taken on line IV-IV shown in FIG 1. The sectional view of FIG. 4 shows a neutral state. As shown in FIG. 4, each of the shift heads 120, 121, 122 has a groove portion that is capable of receiving therein the engagement portion 231. Therefore, as the interlock plate 104 is rotated in the circumferential direction of the shift select lever 103, one of the shift heads 120, 121, 122 that engages with the engagement portion 231 is selected.

Then, as the driver operates the speed ratio change operating lever 250 in a shift direction, the shift operation mechanism (not shown) displaces the shift select lever 103 in the direction of the axis of the shift select lever 103. Thus, the engagement portion 231, engaged with the selected one of the shift heads 120, 121, 122, displaces the corresponding (or selected) one of the fork shafts 123, 124, 125. Then, the corresponding one of the shift forks 128, 126, 127 that are fixed to the fork shafts 123, 124, 125, respectively, is displaced in the direction of the axis thereof, performing a synchronous action.

FIG. 5 is a sectional view taken on line V-V shown in FIG. 1. As shown in FIG. 5, the select operation mechanism 130 is equipped with a lock ball assembly 105 that provides a clicking feeling during the shift operation and also defines a neutral position in the select direction.

The lock ball assembly 105 includes a select-purpose cam 160 fixed to the shift select lever 103, and a pressing mechanism 155 that is fixed to the transmission case 101 and that pressurizes the select-purpose cam 160 to the shift select lever 103.

The pressing mechanism 155 includes a lock ball (press portion) 150 that is pressed to an upper surface of the select-purpose cam 160, a support member 154 that rotatably supports the lock ball 150 and that is provided slidably in a hole portion 156 that is formed in the transmission case 101, a coil spring 152 that urges the support member 154 toward the select-purpose cam 160, and a cap 153 that closes an opening portion of the hole portion 156 and that supports an end portion of the coil spring 152.

Therefore, the lock ball 150 presses the upper surface of the select-purpose cam 160 toward the shift select lever 103, due to the urging force from the coil spring 152.

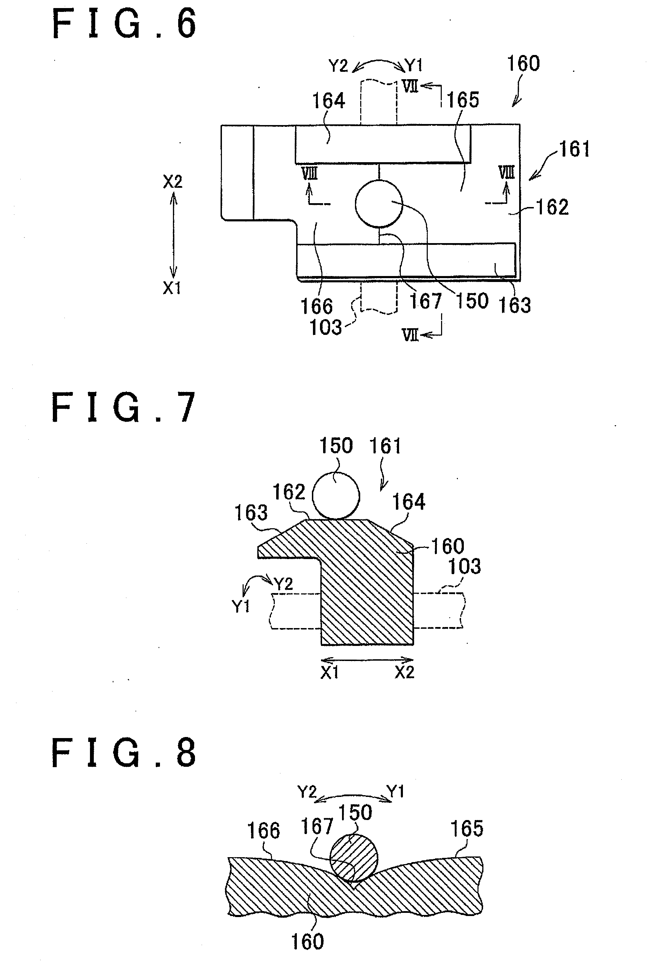

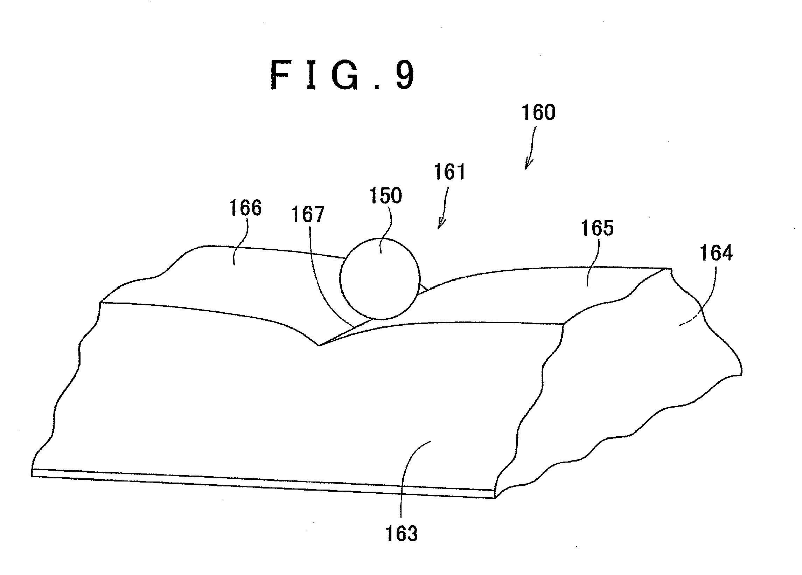

FIG. 6 is a plan view of the select-purpose cam 160. FIG. 7 is a sectional view taken on line VII-VII of FIG. 6, and FIG. 8 is a sectional view taken on line VIII-VIII of FIG. 6. FIG. 9 is a perspective view of an upper end portion of the select-purpose cam 160.

As shown in FIG. 6, the upper surface of the select-purpose cam 160 is formed as a press surface 161 that is pressed by the lock ball 150. Then, as shown in FIGS. 6 and 7, end side portions of the press surface 161 of the select-purpose cam 160 which are located in the direction of the axis of the shift select lever 103 (shift directions X1, X2) are provided as a bevel surface 163 and a bevel surface 164.

The bevel surface 163 and the bevel surface 164 are formed in perimeter edge portions of the select-purpose cam 160, and extend in a direction perpendicular to the shift select lever 103. Of the press surface 161, a portion located between the bevel surface 163 and the bevel surface 164 is provided as a select-purpose press surface 162. As shown in FIGS. 8 and 9, the select-purpose press surface 162 includes a depression portion 167 located in a middle portion of the select-purpose press surface 162 in the select direction, and a curved surface 165 and a curved surface 166 that are located on both sides of the depression portion 167 and that are each curved so as to swell outward with increasing distance from the depression portion 167 in the circumferential direction of the shift select lever 103 (select directions Y1, Y2). Therefore, as the distance from the depression portion 167 in the select direction increases along the curved surface 166 or the curved surface 165, the distance between the select-purpose press surface 162 and the shift select lever 103 increases.

In the neutral state, the lock ball 150 is positioned in the depression portion 167. Each of the bevel surface 163 and the bevel surface 164 is inclined so that a point on the bevel surface approaches the shift select lever 103 as the point is moved away from the select-purpose press surface 162, in the direction of the axis of the shift select lever 103.

The gear train includes, for example, a clutch shaft that is rotatably provided on the transmission case 101 so as to receive power transmitted from the engine, a main shaft disposed coaxially with the clutch shaft, and a counter shaft that is disposed apart from both the clutch shaft and the main shaft.

The clutch shaft is always rotating during a clutch-connected state. A drive gear is formed on the clutch shaft.

The main shaft is provided with a first-speed drive gear, a second-speed drive gear, a third-speed drive gear, a fourth-speed drive gear, a fifth-speed drive gear, a sixth-speed drive gear, and a reverse drive gear that are provided so as to be freely rotatable relative to the main shaft, and is also provided with a synchromesh mechanism that is able to smoothly bring these gears into mesh after synchronizing the rotation speed thereof with the rotation speed of the main shaft.

On the other, hand, a first-speed driven gear that is in mesh with the first-speed drive gear, a second-speed driven gear that meshes with the second-speed drive gear, a third-speed driven gear that meshes with the third-speed drive gear, a fourth-speed driven gear that meshes with the fourth-speed drive gear, a fifth-speed driven gear that meshes with the fifth-speed drive gear, a sixth-speed driven gear that meshes with the sixth-speed drive gear, and a reverse driven gear that meshes with the reverse drive gear are fixed to the counter shaft. Besides, a reverse idler gear is provided between the reverse drive gear and the reverse driven gear in order to reversely rotate the counter shaft at the time of reverse travel.

The synchromesh mechanism includes the first and second-speed synchronization mechanism, the third and fourth-speed synchronization mechanism, and the fifth and sixth-speed synchronization mechanism, which are similarly constructed.

For example, the first and second-speed synchronization mechanism includes a synchronizer hub that is spline-fixed to the main shaft, a synchronizer key inserted in a groove portion formed in an outer peripheral surface of the synchronizer hub, a sleeve that has inner peripheral teeth that engage with a plurality of toothed portions that are formed in the outer peripheral surface of the synchronizer hub, cone portions that are formed in a conical shape in the first-speed drive gear and the second-speed drive gear, and synchronizer rings that are disposed on outer peripheral surfaces of the cone portions. The sleeve is provided so as to be movable relative to the synchronizer hub in the direction of the axis of the main shaft. The synchronizer key has a protrusion portion that is engageable with a recess portion that is formed in an inner peripheral surface of the sleeve.

To bring about the synchronous rotation of, for example, the second-speed drive gear, with the main shaft, firstly the shift fork 127 moves the sleeve of the first and second-speed synchronization mechanism toward the second-speed drive gear while the clutch is in a disconnected state. As the sleeve moves in this manner, the synchronizer key engaged with the sleeve also is displaced so that the synchronizer key presses the synchronizer ring against the cone portion formed on the second-speed drive gear.

Then, due to the friction occurring between the synchronizer ring and the cone portion of the second-speed drive gear, the rotation speed of the second-speed drive gear approaches the rotation speed of the synchronizer ring and the main shaft.

Then, as the sleeve further moves to the side of the second-speed drive gear, the engaged state of the sleeve and the synchronizer key is released. At this time, the rotation speed of the sleeve and the rotation speed of the synchronizer ring are different from each other so that the toothed portions formed in the inner periphery of the sleeve and the outer peripheral teeth formed in the outer periphery of the synchronizer ring cannot mesh with each other. Therefore, the toothed portions formed in the inner peripheral surface of the sleeve press the toothed portions formed in the outer periphery of the synchronizer ring, so that the synchronizer ring is further pressed to the cone portion of the second-speed drive gear. Due to this, the rotation speed of the second-speed drive gear and the rotation speed of the sleeve become more close to each other.

Then, when the rotation speed of the second-speed drive gear and the rotation speeds of the synchronizer ring and the sleeve become equal, the synchronizer ring becomes free in the rotation direction. Therefore, the toothed portions of the sleeve advance through spaces between the toothed portions formed in the outer periphery of the synchronizer ring. The second-speed drive gear has toothed portions that mesh with the toothed portions formed in the inner peripheral surface of the sleeve, besides a gear portion that meshes with the second-speed driven gear. Then, as described above, the toothed portions of the sleeve, after advancing through the spaces between the toothed portions formed on the synchronizer ring, mesh with the toothed portions formed on the second-speed drive gear, completing the shift to the second speed.

Likewise, the shift to the first speed change step can also be performed by the first and second-speed synchronization mechanism. The sleeve of the third and fourth-speed synchronization mechanism is displaced by the shift fork 126 that is fixed to the fork shaft 124, and the sleeve of the fifth and sixth-speed synchronization mechanism is driven by the shift fork 128 that is fixed to the fork shaft 123.

Herein, the speed ratio change action of the transmission 100 constructed as described above will be described. Firstly, in the neutral state, the lock ball 150 is positioned in the depression portion 167 as shown in FIGS. 6 to 8. At this time, the engagement portion 231 of the interlock plate 104 (the inner lever 133) is in engagement with the shift head 121 that is fixed to the fork shaft 124, as shown in FIG. 4.

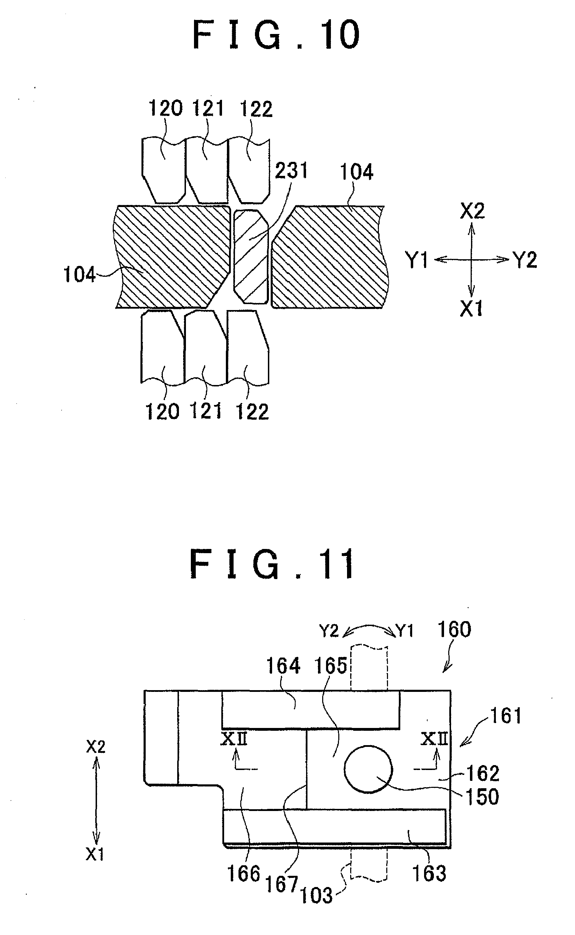

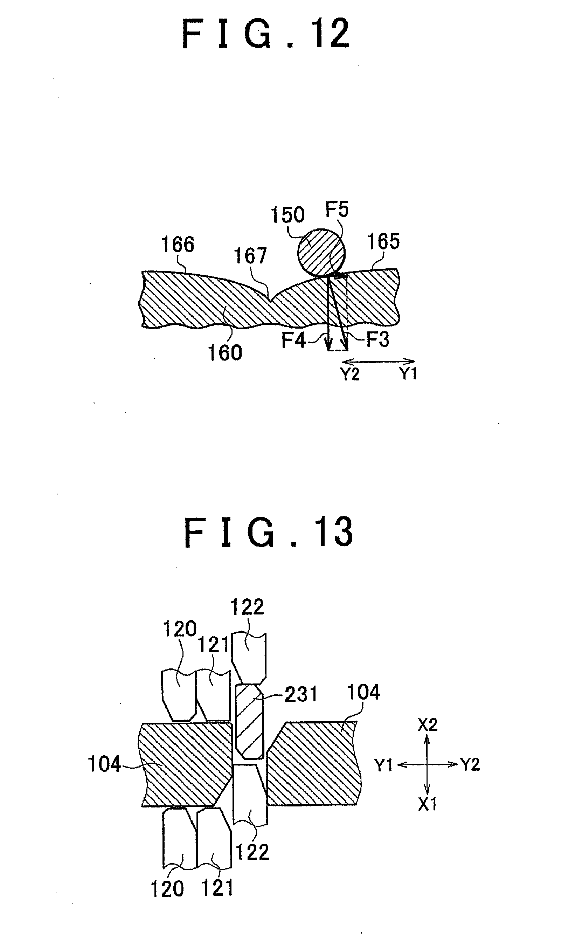

With reference to FIGS. 10 to 15, the speed ratio change from the neutral state to the first speed change step will be described. FIG. 10 is a sectional view of the engagement portion 231 and its vicinity in a state in which the engagement portion 231 has moved from the state shown in FIG. 4, in the select direction to the side of the first speed change step and the second speed change step. FIG. 11 is a plan view of the select-purpose cam 160 during the state shown in FIG. 10. Furthermore, FIG. 12 is a sectional view taken on line XII-XII of FIG. 11.

As the shift select lever 103 is rotated in one of the circumferential directions (in the select direction Y2) by the select operation mechanism 130, the position of contact between the lock ball 150 and the press surface 161 is displaced to the side of the curved surface 165.

It is to be noted herein that the lock ball assembly 105 provided with the lock ball 150 is fixed to the transmission case 101, and therefore that as the select-purpose cam 160 is driven by the shift operation mechanism and the select operation mechanism 130, the lock ball 150 moves relative to the select-purpose cam 160.

At the time of the selection action to the first speed change step, the select-purpose cam 160 rotates about the shift select lever 103 in the select direction Y2. Therefore, the engagement portion 231 is displaced in the select direction Y2 from the state shown in FIG. 4, and moves into the groove portion defined by the shift head 122.

At this time, the lock ball 150 moves onto the curved surface 165 as shown in FIG. 12. The curved surface 165, as shown in FIG. 12, is curved so as to be further apart from the shift select lever 103 as the distance from the depression portion 167 increases. Thus, the lock ball 150, urged by the coil spring 152, applies a pressing force F3 to the curved surface 165 in a direction perpendicular thereto.

The pressing force F3 can be decomposed into a component force F4 that presses the select-purpose cam 160 toward the shift select lever 103, and a component force F5 that presses the select-purpose cam 160 in the select direction Y1. Therefore, the select-purpose cam 160 is pressed in the select direction Y1 by the lock ball 150.

Therefore, due to the pressing force from the lock ball 150, the select-purpose cam 160 and the shift select lever 103 tend to rotate from the state shown in FIGS. 11 and 12 toward a state in which the position of contact between the lock ball 150 and the press surface 161 is in the depression portion 167. Thus, the transmission 100 has a so-called select return characteristic of tending to return to the neutral state.

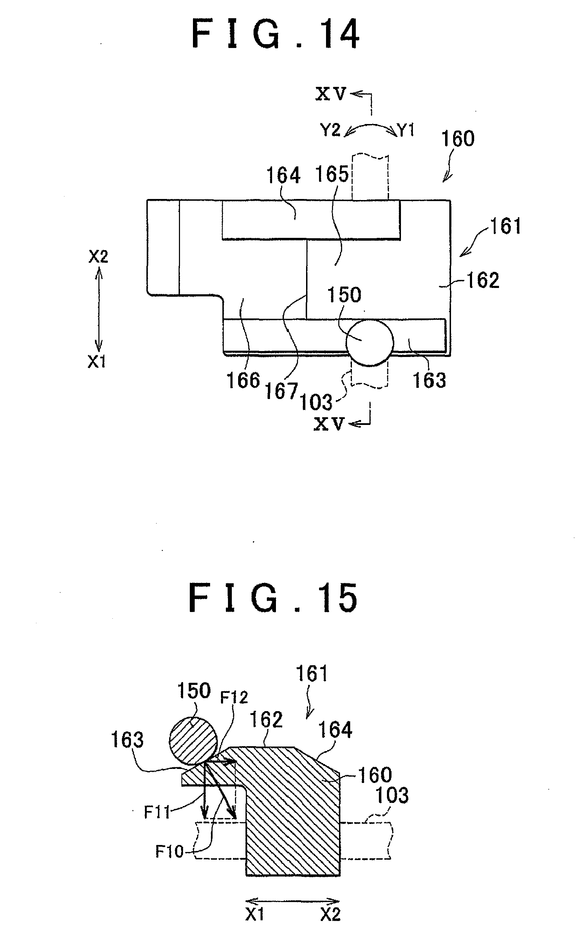

FIG. 13 is a sectional view of the engagement portion 231 and its surroundings when the engagement portion 231 has been shifted from the state shown in FIG. 10 toward the first speed change step. FIG. 14 is a plan view of the select-purpose cam 160 during a state shown in FIG. 13, and FIG. 15 is a sectional view taken on line XV-XV shown in FIG. 14.

Referring to FIG. 13 and FIG. 2, by displacing the shift select lever 103 and the inner lever 133 in a direction of the axis of the shift select lever 103 (shift direction X2) by the shift operation mechanism (not shown), the shift head 122 and the fork shaft 125 are displaced in the shift direction X2 (one of the directions of the axis of the fork shaft 125). Therefore, the shift fork 127 provided on the fork shaft 125 displaces the sleeve of the first and second-speed synchronization mechanism toward the first-speed drive gear. Therefore, the rotation speeds of the first-speed drive gear and the main shaft become equal, thus completing the speed ratio change action to the first speed change step.

At this time, as shown in FIGS. 14 and 15, the shift select lever 103 and the select-purpose cam 160 are displaced in the shift direction X2, so that the position of contact between the lock ball 150 and the press surface 161 is displaced to the bevel surface 163 and the lock ball 150 comes into contact with the bevel surface 163.

Then, by the urging force from the coil spring 152, the lock ball 150 presses the bevel surface 163 in a direction perpendicular to the bevel surface 163. It is to be noted herein that the bevel surface 163 is inclined so as to approach the shift select lever 103 as the distance from the select-purpose press surface 162 increases. Therefore, the pressing force F10 exerted from the lock ball 150 to the bevel surface 163 can be decomposed into a component force F12 in the shift direction X2 and a component force F11 that presses the select-purpose cam 160 toward the shift select lever 103.

Therefore, the select-purpose cam 160 is pressed in the shift direction X2 by the urging force of the coil spring 152, via the lock ball 150.

Thus, during a process in which a driver shifts the speed ratio change operating lever 250 to the first speed, when the lock ball 150 reaches the bevel surface 163, the coil spring 152 and the lock ball 150 press the select-purpose cam 160 in the same direction as that of the driver's operation, assisting the driver's operation. This will also restrain occurrence of rattling or the like in the shift directions.

Therefore, when the driver shifts the speed ratio change operating lever 250 toward the first speed change step after displacing the lever 250 in the select direction toward the first and second speeds, a slight displacement of the speed ratio change operating lever 250 toward the first speed change step will give the driver a sensation that the speed ratio change operating lever 250 is drawn to the side of the first speed change step. Thus, according to this transmission 100, the operation feeling of the speed ratio change operating lever 250 in the shift operation can be improved.

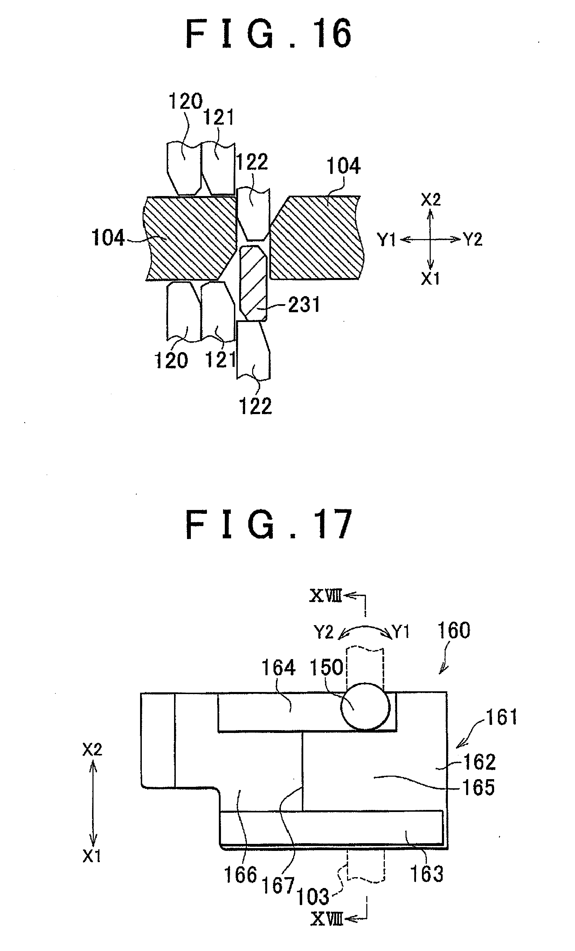

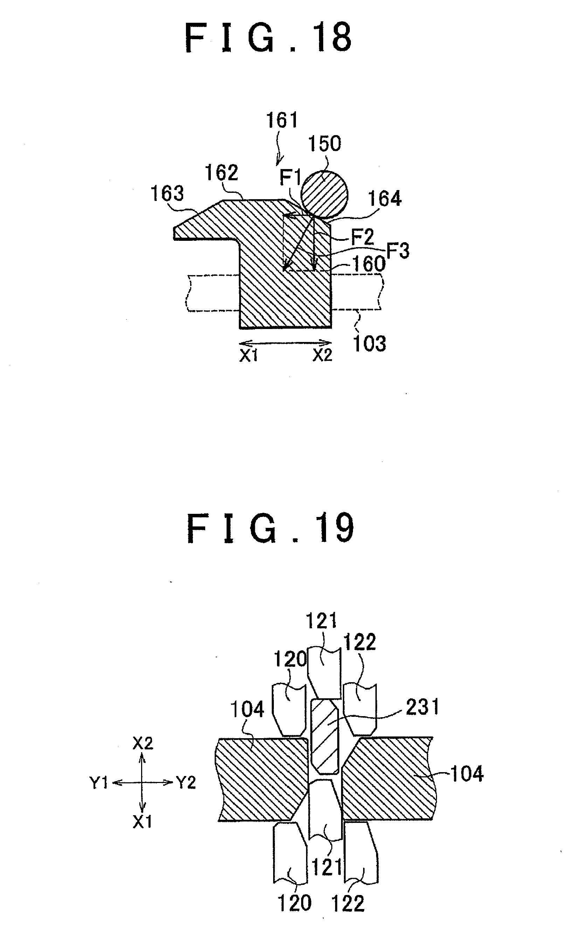

FIG. 16 is a sectional view of the engagement portion 231 and its surroundings when the engagement portion 231 has been shifted from the state shown in FIG. 10 toward the second speed change step. Furthermore, FIG. 17 is a plan view of the select-purpose cam 160 during the state shown in FIG. 16, and FIG. 18 is a sectional view taken on line XVIII-XVIII shown in FIG. 17.

As shown in FIG. 16, as the engagement portion 2321 of the inner lever 133 is displaced in the shift direction X1 from the state shown in FIG. 10, the shift head 122 is also displaced in the shift direction X1. Therefore, the fork shaft 125 to which the shift head 122 is fixed, and the shift fork 127 fixed to the fork shaft 125 are also displaced in the shift direction X1. Therefore, the sleeve of the first and second-speed synchronization mechanism is displaced to the second-speed drive gear side, so that the rotation speeds of the second-speed drive gear and the main shaft become equal, thus completing the shift to the second speed change step.

At this time, as shown in FIGS. 17 and 18, the select-purpose cam 160 and the shift select lever 103 are displaced in the shift direction X1, so that the lock ball 150 comes into contact with the bevel surface 164 of the press surface 161. Then, the lock ball 150 presses the bevel surface 164 in a direction perpendicular to the bevel surface 164, by the urging force from the coil spring 152. It is to be noted herein that the bevel surface 164 is inclined so as to approach the shift select lever 103 with increasing distance from the select-purpose press surface 162 in the shift direction X2. Therefore, the pressing force F3 by which the lock ball 150 presses the bevel surface 164 can be decomposed into a component force F1 that presses the bevel surface 164 in the shift direction X1, and a component force F2 that presses the bevel surface 164 toward the shift select lever 103.

Therefore, as the lock ball 150 contacts the bevel surface 164, the select-purpose cam 160 is pressed in the shift direction X1 by the urging force of the coil spring 152, via the lock ball 150. Thus, during a process in which the driver shifts the speed ratio change operating lever 250 toward the second speed, when the lock ball 150 reaches the bevel surface 164, the coil spring 152 and the lock ball 150 press the select-purpose cam 160 in the same direction as that of the driver's operation, assisting the driver's operation. This will also restrain the occurrence of rattling in the shift directions.

Therefore, when the driver shifts the speed ratio change operating lever 250 toward the second speed change step after displacing the lever 250 in the select direction toward the first and second speeds, a slight displacement of the speed ratio change operating lever 250 toward the second speed change step will give the driver a sensation that the speed ratio change operating lever 250 is drawn to the side of the second speed change step. Thus, according to this transmission 100, the operation feeling of the speed ratio change operating lever 250 in the shift operation can be improved.

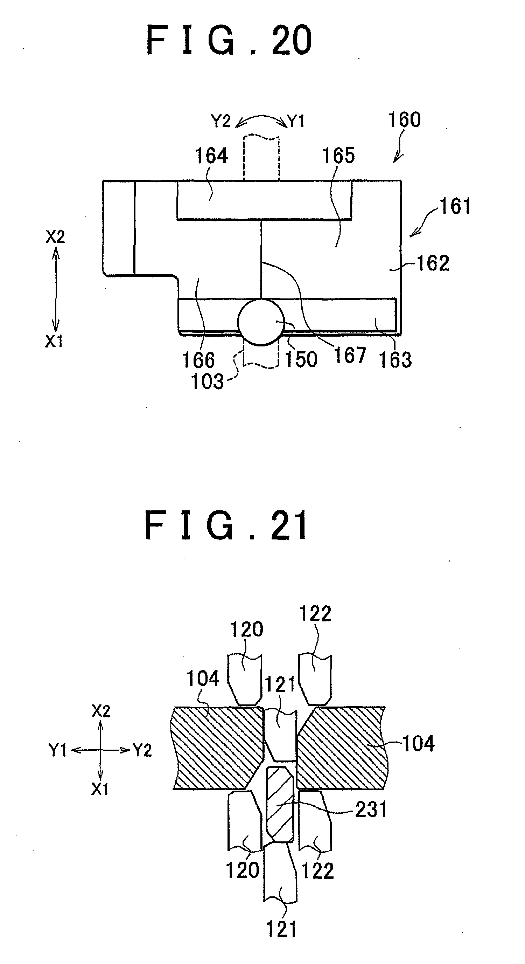

FIG. 19 is a sectional view of the engagement portion 231 and its surroundings when the engagement portion 231 has been shifted from the state shown in FIG. 4 toward the third speed change step is made, and FIG. 20 is a plan view of the select-purpose cam 160 when the select-purpose cam 160 has been shifted from the state shown in FIG 6 toward the third speed change step.

As shown in FIG. 19, as the inner lever 133 is displaced in the shift direction X2, the shift head 121 and the fork shaft 124 are also displaced in the shift direction X2, and the shift fork 126 fixed to the fork shaft 124 is also displaced in the shift direction X2. Therefore, the sleeve of the third and fourth-speed synchronization mechanism is displaced toward the third-speed drive gear by the shift fork 126, so that the rotation speeds of the third-speed drive gear and the main shaft become equal, thus completing the shift to the third speed change step.

At this time, the shift select lever 103 and the select-purpose cam 160 are displaced in the shift direction X2 from the state shown in FIG. 6, so that the lock ball 150 comes into contact with the bevel surface 163. Therefore, as in the state shown in FIG. 15, the select-purpose cam 160 is pressed in the shift direction X2, by the urging force from the coil spring 152, via the lock ball 150.

Therefore, during a process in which the driver performs a shift to the third speed change step, as the lock ball 150 reaches the bevel surface 163, the coil spring 152 and the lock ball 150 assist the driver's operation, and also restrains the occurrence of rattling in the shift directions. Therefore, the operation feeling during the shift operation to the third speed change step can also be improved.

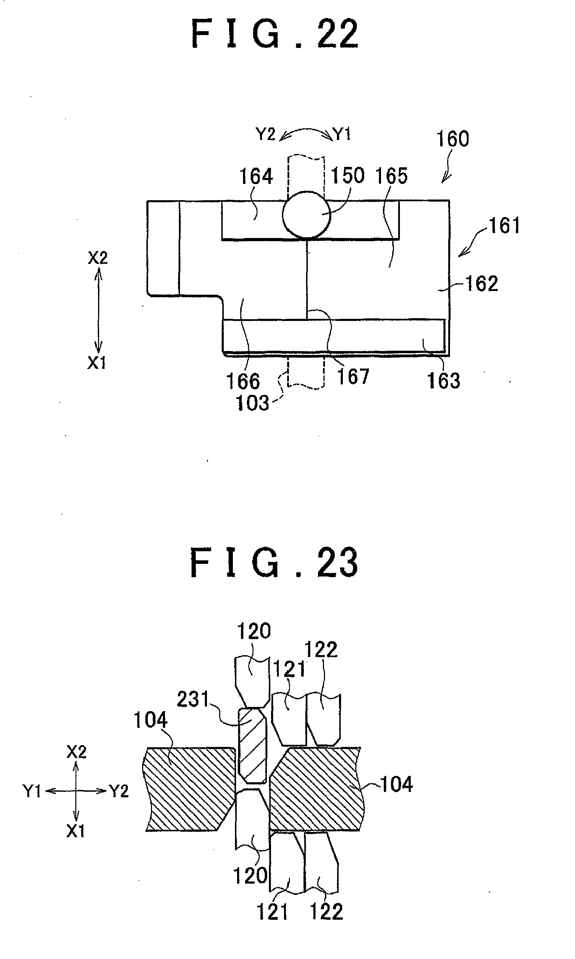

FIG. 21 is a sectional view of the engagement portion 231 and its surroundings when the engagement portion 231 has been shifted from the state shown in FIG. 4 toward the fourth speed change step. FIG. 22 is a plan view of the select-purpose cam 160 when the select-purpose cam 160 has been shifted from the state shown in FIG. 6 toward the fourth speed change step.

As shown in FIG. 21, as the inner lever 133 is displaced in the shift direction X1 the shift head 121 and the fork shaft 124 are also displaced in the shift direction X1. Then, the shift fork 126 fixed to the fork shaft 124 displaces the sleeve of the third and fourth-speed synchronization mechanism toward the fourth-speed drive gear. Therefore, the rotation speed of the fourth-speed drive gear and the rotation speed of the main shaft become equal to each other, thus completing the fourth speed change step.

At this time, the select-purpose cam 160 and the shift select lever 103 are displaced in the shift direction X1 from the state shown in FIG. 6, so that the lock ball 150 comes into contact with the bevel surface 164. Therefore, as shown in FIG. 18, the lock ball 150 presses the select-purpose cam 160 in the shift direction X1. Hence, when the driver performs a shift operation toward the fourth speed change step, the lock ball 150 and the coil spring 152 assist the driver's shift operation, and also restrains the occurrence of rattling in the shift directions. Therefore, the driver's operation feeling at the time of shifting to the fourth speed change step can be improved:

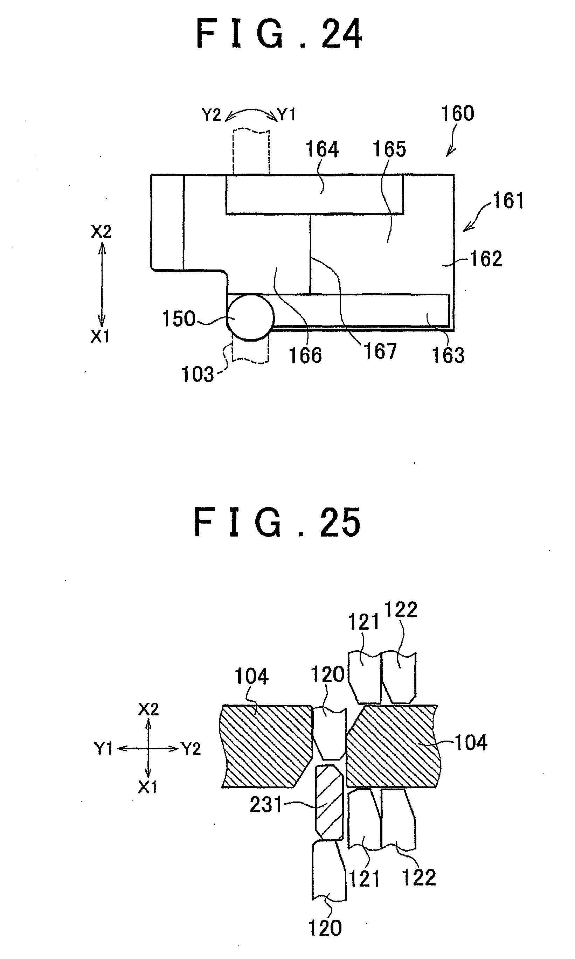

FIG 23 is a sectional view of the engagement portion 231 and its surrounding portions when the engagement portion 231 has been shifted toward the fifth speed change step. FIG. 24 is a plan view of the select-purpose cam 160 when the select-purpose cam 160 has been shifted toward the fifth speed change step.

It is to be noted herein that as shown in FIG. 23, as the driver operates the speed ratio change operating lever 250 from the neutral state toward the fifth or sixth speed change step, the engagement portion 231 of the inner lever 133 fits into the groove that is defined by the shift head 120.

When the driver shifts the speed ratio change operating lever 250 toward the fifth speed, the engagement portion 231 is displaced in the shift direction X2. Therefore, the shift head 120, the fork shaft 123, and the shift fork 128 are also displaced in the shift direction X2. Therefore, the shift fork 128 displaces the sleeve of the fifth and sixth-speed synchronization mechanism toward the fifth-speed drive gear. Therefore, the rotation speeds of the fifth-speed drive gear and the main shaft become equal to each other, thus completing the shift to the fifth speed change step.

Referring to FIG. 24, during the speed ratio change operation to the fifth speed change step, when the driver displaces the speed ratio change operating lever 250 in the select restrains occurrence the fifth and sixth speeds, the select-purpose cam 160 rotates in the select direction Y1 about the shift select lever 103.

Therefore, the lock ball 150 is relatively displaced in the select direction Y2 on the select-purpose press surface 162.

After that, when the driver shifts the speed ratio change operating lever 250 toward the fifth speed, the select-purpose cam 160 and the shift select lever 103 are displaced in the shift direction X2. Therefore, the lock ball 150 is displaced in the shift direction X1 on the press surface 161, so that the lock ball 150 comes into contact with the bevel surface 163.

Therefore, the lock ball 150 presses the select-purpose cam 160 in the shift direction X2 as shown in FIG. 15, by the urging force of the coil spring 152, and thus assists the displacement of the shift select lever 103 and the inner lever 133 in the shift direction X2, and restrains the occurrence of rattling in the shift directions.

Therefore, at the time of the shift to the fifth speed change step, too, the lock ball 150 reaches the bevel surface 163, so as to assist a shift operation in which the driver shifts to the fifth speed change step and thus improve the operation feeling in the shift operation.

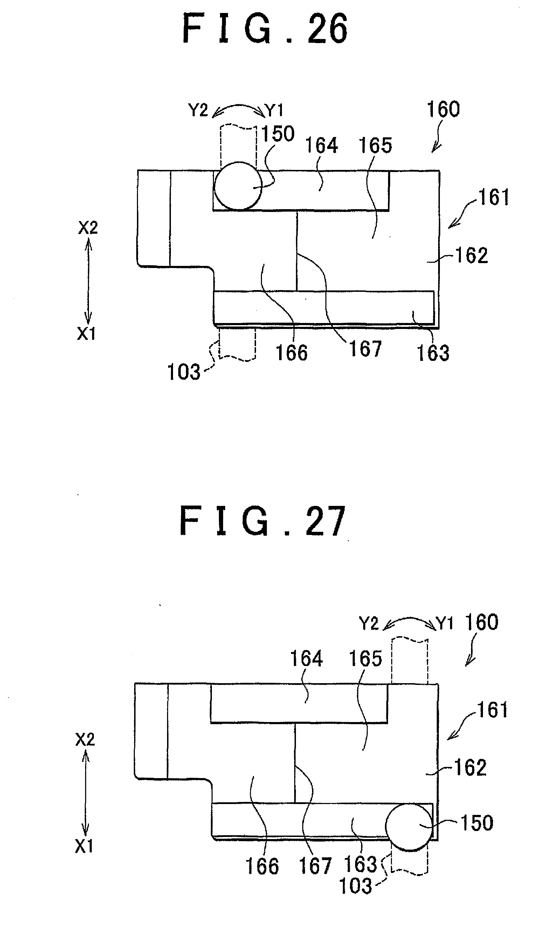

FIG 25 is a sectional view of the engagement portion 231 and its surroundings when the engagement portion 231 has been shifted toward the sixth speed change step. FIG. 26 is a plan view of the select-purpose cam 160 when the select-purpose cam 160 has been shifted toward the sixth speed change step. When the driver operates the speed ratio change operating lever 250 from the neutral state, in the select direction toward the fifth and the sixth speed change steps, the engagement portion 231 fits into the groove portion that is defined by the shift head 120. After that, if the driver shifts the speed ratio change operating lever 250 toward the sixth speed change step, the engagement portion 231 is displaced in the shift direction X1.

Therefore, the fork shaft 123 is also displaced in the shift direction X2, thus displacing the sleeve of the fifth and sixth-speed synchronization mechanism toward the sixth-speed drive gear. As a result, the rotation speeds of the sixth-speed drive gear and the main shaft become equal to each other, thus completing the shift to the sixth speed change step.

During this process, as the driver operates the speed ratio change operating' lever 250 in the select direction toward the fifth and sixth speed change steps, the select-purpose cam 160 rotates in the select direction Y1 about the shift select lever 103. Therefore, the lock ball 150 is displaced in the select direction Y2 on the press surface 161.

After that, as the driver operates the speed ratio change operating lever 250 toward the sixth speed change step, the select-purpose cam 160 is displace din the shift direction X1. Therefore, the lock ball 150 is relatively displaced toward the bevel surface 164, and reaches the bevel surface 164.

Therefore, the select-purpose cam 160 assumes a state as shown in FIG. 18, in which the lock ball 150 presses the select-purpose cam 160 in the shift direction X1 by the urging force of the coil spring 152. Hence, when the driver performs a speed ratio change operation toward the sixth speed change step, too, the lock ball 150 and the coil spring 152 assist the driver's operation, and also restrain occurrence of rattling in the shift directions. Thus, the driver's shift operation feeling can be improved.

FIG. 27 is a plan view of the select-purpose cam 160 when the reverse travel speed step has been selected. During this process, when the driver operates the speed ratio change operating lever 250 in the select direction toward the reverse travel speed step, a reverse-travel lever fixed to the shift select lever 103 and protruded in a radial direction of the shift select lever 103 engages with a reverse-travel fork shaft (not shown).

After that, when the driver shifts the speed ratio change operating lever 250 toward the reverse travel speed change step, the shift select lever 103 is displaced in the shift direction X2. Therefore, the reverse-travel fork shaft is displaced in the shift direction X2, and a reverse-travel shift fork provided on the reverse-travel fork shaft is displaced in the shift direction X2. Therefore, the reverse-travel sleeve is moved so as to establish the reverse travel speed change step.

During this process, as the driver operates the speed ratio change operating lever 250 in the select direction toward the reverse travel speed step, the select-purpose cam 160 is rotated in the select direction Y2 about the shift select lever 103. Therefore, the lock ball 150 relatively moves in the select direction Y1 on the select-purpose press surface 162.

Then, when the driver operates the speed ratio change operating lever 250 in the shift direction to the reverse travel speed step, the shift select lever 103 and the select-purpose cam 160 are moved in the shift direction X2. Therefore, the lock ball 150 is displayed toward the bevel surface 163, and then reaches the bevel surface 163.

Then, the lock ball 150 presses the select-purpose cam 160 in the shift direction X2 as shown in FIG. 15, by the urging force of the coil spring 152.

Thus, as the lock ball 150 and the coil spring 152 press the select-purpose cam 160 in the shift direction X2, the driver's shift operation is assisted, and the occurrence of rattling in the shift directions is restrained. Therefore, in the transmission 100, the shift operation feeling in the shift operation toward the reverse travel speed step is improved.

The speed ratio change operation mechanism 200 in accordance with Embodiment 1 is suitable to a direct control type transmission in which the shift select lever 103 is operated by the speed ratio change operating lever 250, a column shift type (remote control type) transmission in which the operation force from the speed ratio change operating lever 25.0 is transmitted to the shift select lever 103 via a control shaft and a connecting rod, etc. Besides, the speed ratio change operation mechanism 200 can also be applied to a floor shift type (remote control type) transmission that includes a wire connected to the speed ratio change operating lever 250, and a control link that drives the shift select lever 103 by the operation force transmitted via the wire.

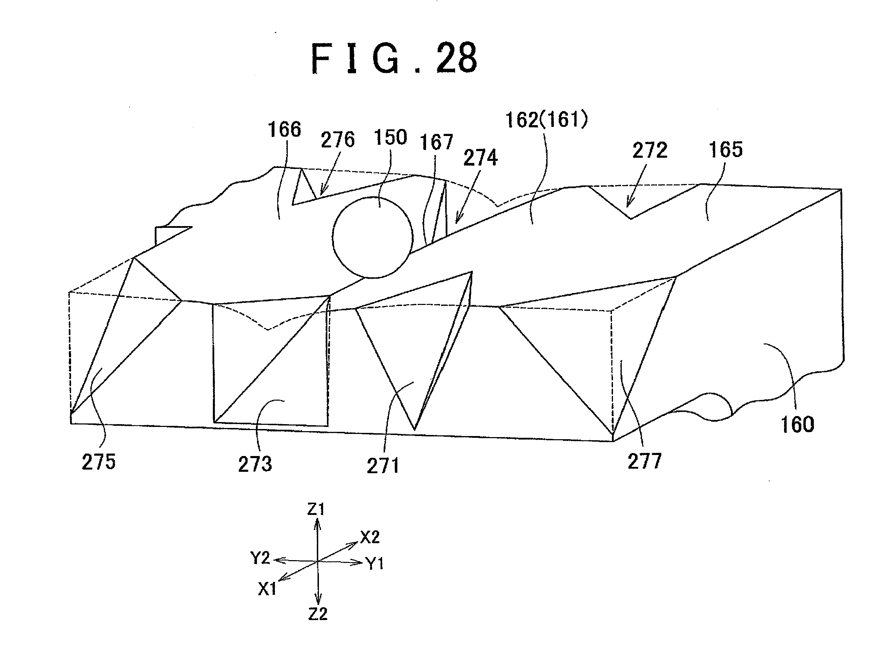

A transmission and a speed ratio change operation mechanism in accordance with Embodiment 2 of the invention, with reference to FIGS. 28 to 40, and FIGS. 1 to 27 as appropriate. Incidentally, components, constructions and the like in FIGS. 28 to 40 that are the same as or comparable to those shown in FIGS. 1 to 27 are represented by the same reference characters, and descriptions thereof will sometimes be omitted below.

FIG 28 is a perspective view showing an upper portion of a select-purpose cam that is provided in a speed ratio change operation mechanism in accordance with Embodiment 2. As shown in FIG. 28, the upper surface of the select-purpose cam includes a select-purpose press surface 162 that extends in a circumferential direction of the shift select lever 103, and a first-speed bevel surface 271, a second-speed bevel surface 272, a third-speed bevel surface 273, a fourth-speed bevel surface 274, a fifth-speed bevel surface 275, a sixth-speed bevel surface 276, and a reverse-speed bevel surface 277 that are formed at positions that are adjacent to the select-purpose press surface 162 in the direction of the axis of the shift select lever 103 and that are spaced from each other in the circumferential direction of the shift select lever 103. Incidentally, in the transmission in accordance with Embodiment 2, when a speed ratio change operating lever 250 is operated in the select direction, the shift select lever 103 rotates in the circumferential direction of the shift select lever 103, and the select-purpose cam 160 rotates about the shift select lever 103.

Therefore, in Embodiment 2, the select direction (select directions Y1, Y2) of the select-purpose cam 160 and the shift select lever 103 is the circumferential direction of the shift select lever 103, and the shift direction (shift directions X1, X2) is the direction of the axis of the shift select lever 103.

FIG. 28 shows a neutral state, in which a lock ball 150 is positioned at a neutral position. N that is in a center portion of a depression portion 167 in the direction of the axis of the shift select lever 103 (shift directions X1, X2).

The reverse-speed bevel surface 277 is formed on a corner portion that is positioned in the select direction Y1 from the neutral position N and in the shift direction X1 therefrom. The first-speed bevel surface 271 is formed at a position that is adjacent to the reverse-speed bevel surface 277 in the select direction Y2. The third-speed bevel surface 273 is formed at a position that is adjacent to the first-speed bevel surface 271 in the select direction Y2. The fifth-speed bevel surface 275 is formed at a position that is adjacent to the third-speed bevel surface 273 in the select direction Y2.

The second-speed bevel surface 272 is positioned in the shift direction X2 from the first-speed bevel surface 271. The fourth-speed bevel surface 274 is positioned in the shift direction X2 from the third-speed bevel surface 273. The sixth-speed bevel surface 276 is positioned in the shift direction X2 from the fifth-speed bevel surface 275.

For example, if a driver performs select and shift operations to establish the fifth speed change step from the neutral state, the shift select lever 103 rotates in the select direction Y1, and then moves in the shift direction X2. Then, when the select and the shift to the fifth speed change step have been completed, the lock ball 150 is on the fifth-speed bevel surface 275.

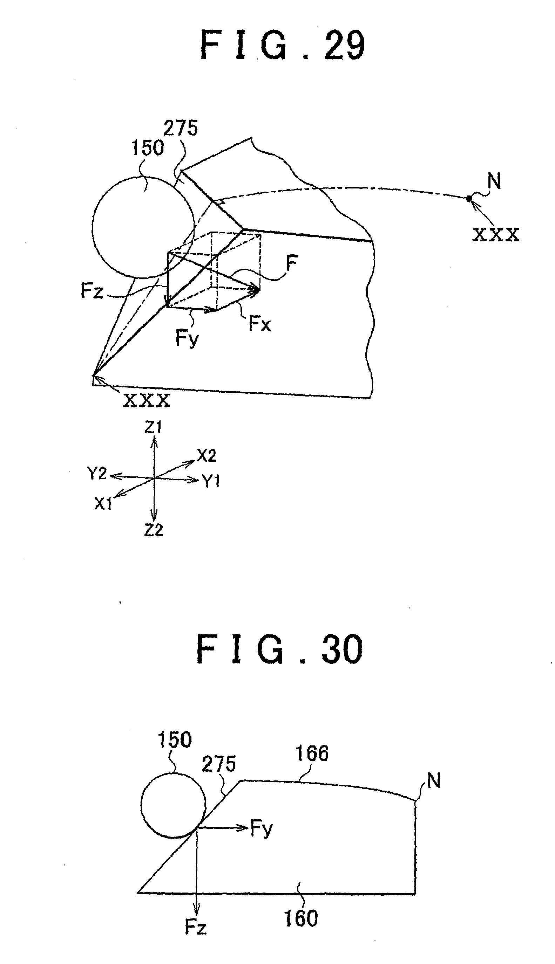

FIG. 29 is a schematic diagram showing an inclined state of the fifth-speed bevel surface 275. FIG. 30 is a sectional view taken on line XXX-XXX shown in FIG. 29. As shown in FIG. 29, the fifth-speed bevel surface 275 is inclined so as to approach the shift select lever 103 with increasing distance in the shift direction X1 from the neutral position N, and so as to approach the shift select lever 103 with increasing distance from the neutral position N in the select direction Y2. That is, the fifth-speed bevel surface 275 is inclined so as to approach the shift select lever 103 as the distance from the neutral position N increases.

The lock ball 150 is pressed to the select-purpose cam 160 by a coil spring 152, that is, the lock ball 150 presses the fifth-speed bevel surface 275 in a direction perpendicular to the fifth-speed bevel surface 275.

It is to be noted herein that the pressing force F by which the lock ball 150 presses the fifth-speed bevel surface 275 can be decomposed into a component force Fz that presses the select-purpose cam 160 in a thickness direction Z2, a component force Fy that presses the select-purpose cam 160 in the select direction Y1, and a component force Fx that presses the select-purpose cam 160 in the shift direction X2.

In this manner, by pressing the select-purpose cam 160 in the shift direction X2, the lock ball 150 assists the shift to the fifth speed change step, and also restrains the occurrence of rattling in the shift directions.

Furthermore, as the lock ball 150 also presses the fifth-speed bevel surface 275 in the select direction Y1, the lock ball 150 receives a reaction force in the select direction Y2 from the fifth-speed bevel surface 275. In this manner, the lock ball 150 is supported by the fifth-speed bevel surface 275 so as not to deviate in position in the select direction Y1.

Therefore, the transmission in accordance with Embodiment 2 is able to restrain the occurrence of rattling between the lock ball 150 and the select-purpose cam 160 in the select directions after the shift to the fifth speed change step is completed, and is also able to improve the shift operation feeling.

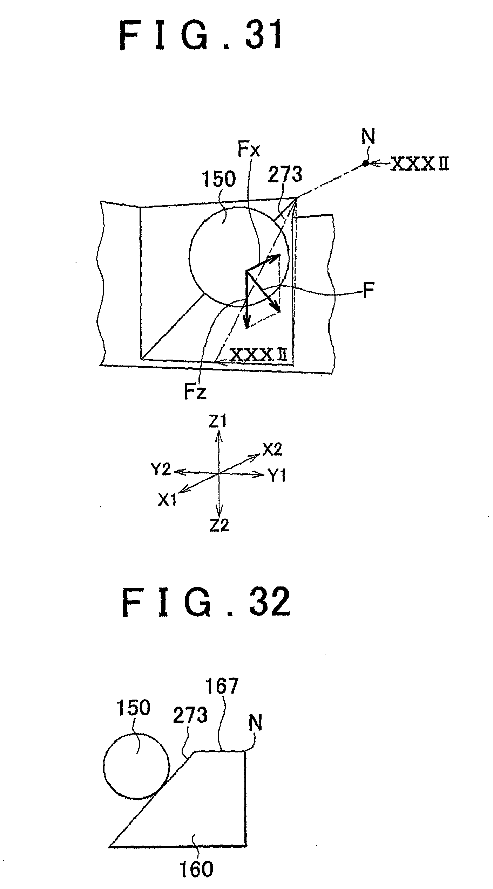

FIG. 31 is a schematic diagram showing an inclined state of the third-speed bevel surface 273, and FIG. 32 is a sectional view taken on line XXXII-XXXII shown in FIG. 31. As shown in FIGS. 31 and 32, the third-speed bevel surface 273 is formed at the position that is adjacent to the neutral position N in the shift direction X1.

The third-speed bevel surface 273 is inclined so as to approach the shift select lever 103 with increasing distance from the neutral position N in the shift direction X1. However, the third-speed bevel surface 273 is flat in the select directions Y1, Y2. That is, the third-speed bevel surface 273 is also inclined so as to approach the shift select lever 103 as the distance from the neutral position N increases.

When the driver shifts the speed ratio change operating lever 250 to the third speed change step, the lock ball 150 is positioned on the third-speed bevel surface 273. The pressing force F by which the lock ball 150 presses the third-speed bevel surface 273 can be decomposed into the component force Fx that presses the select-purpose cam 160 in the shift direction X2, and the component force Fz that presses the select-purpose cam 160 toward the shift select lever 103.

In this manner, when the lock ball 150 is positioned on the third-speed bevel surface 273, the third-speed bevel surface 273 of the select-purpose cam 160 is pressed in the shift direction X2. Therefore, this transmission is also able to assist the shift operation to the third speed change step, and restrain the occurrence of rattling in the shift directions.

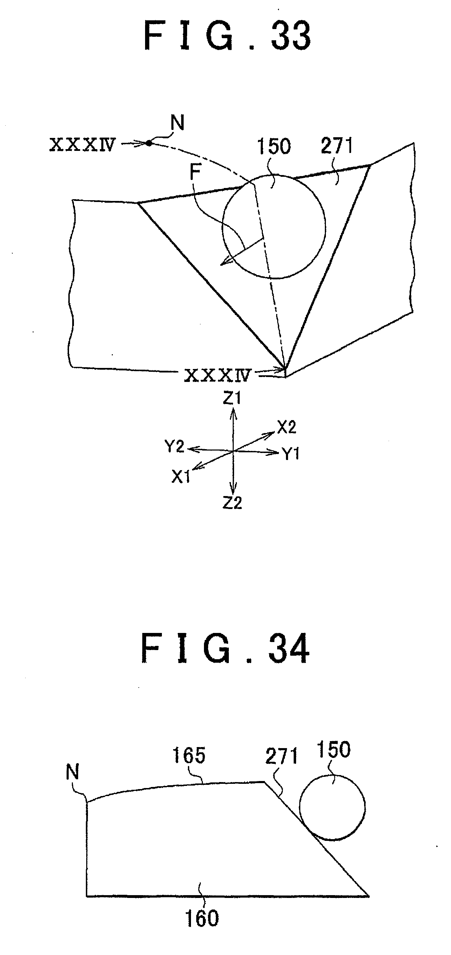

FIG 33 is a schematic diagram showing an inclined state of the first-speed bevel surface 271, and FIG 34 is a sectional view taken on line XXXIV-XXXIV of FIG. 33.

As shown in FIG. 33, the first-speed bevel surface 271 is inclined so as to approach the shift select lever 103 with increasing distance in the select direction Y1 from the neutral position N, and is also inclined so as to approach the shift select lever 103 with increasing distance in the shift direction X1 from the neutral position N. That is, the first-speed bevel surface 271, too, is inclined so as to approach the shift select lever 103 as the distance from the neutral position N increases.

Therefore, the pressing force F by which the lock ball 150 presses the first-speed bevel surface 271 can be decomposed into a component force that presses the select-purpose cam 160 in the shift direction X1, a component force that presses it in the select direction Y2, and a component force that presses it in the thickness direction Z2.

Since the lock ball 150 presses the first-speed bevel surface 271 in the foregoing manner, advantages as stated above can be achieved. That is, since the lock ball 150 and the coil spring 152 press the select-purpose cam 160 in the select direction Y2, this construction is able to assist the operation of shifting to the first speed change step, and also restrain the occurrence of rattling in the shift directions.

Furthermore, since the first-speed bevel surface 271 supports the lock ball 150 in the select directions Y1, Y2, the construction is able to restrain the occurrence of rattling between the lock ball 150 and the select-purpose cam 160 after the shift to the first speed change step is completed.

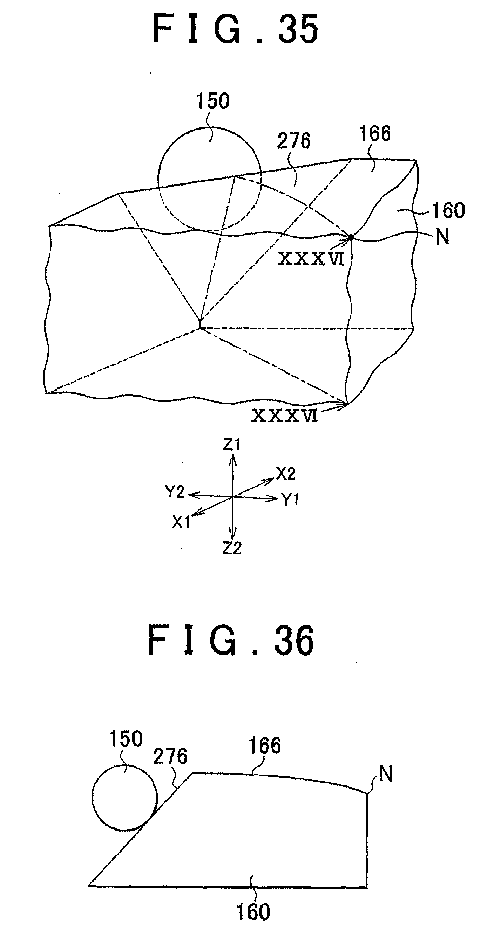

FIG. 35 is a schematic diagram showing an inclined state of the sixth-speed bevel surface 276, and FIG. 36 is a sectional view taken on line XXXVI-XXXVI shown in FIG. 35.

As shown in FIGS. 35 and 36, the sixth-speed bevel surface 276 is inclined so as to approach the shift select lever 103 with increasing distance in the select direction Y2 from the neutral position N, and is also inclined so as to approach the shift select lever 103 with increasing distance in the shift direction X2 from the neutral position N. That is, the sixth-speed bevel surface 276, too, is inclined so as to approach the shift select lever 103 as the distance from the neutral position N increases.

Therefore, the pressing force F by which the lock ball 150 presses the sixth-speed bevel surface 276 can be decomposed into a component force that presses the select-purpose cam 160 in the shift direction X1, a component force that presses it in the select direction Y1, and a component force that presses it in the thickness direction Z2.

Since the lock ball 150 positioned on the sixth-speed bevel surface 276 presses the select-purpose cam 160 in the select direction Y1 in the foregoing manner, the lock ball 150 and the coil spring 152 are able to assist the operation of shifting to the sixth speed change step, and also restrain the occurrence of rattling in the shift directions.

Furthermore, since the sixth-speed bevel surface 276 supports the lock ball 150 in the select directions Y1, Y2, this construction is able to restrain the occurrence of rattling between the select-purpose cam 160 and the lock ball 150 positioned on the sixth-speed bevel surface 276.

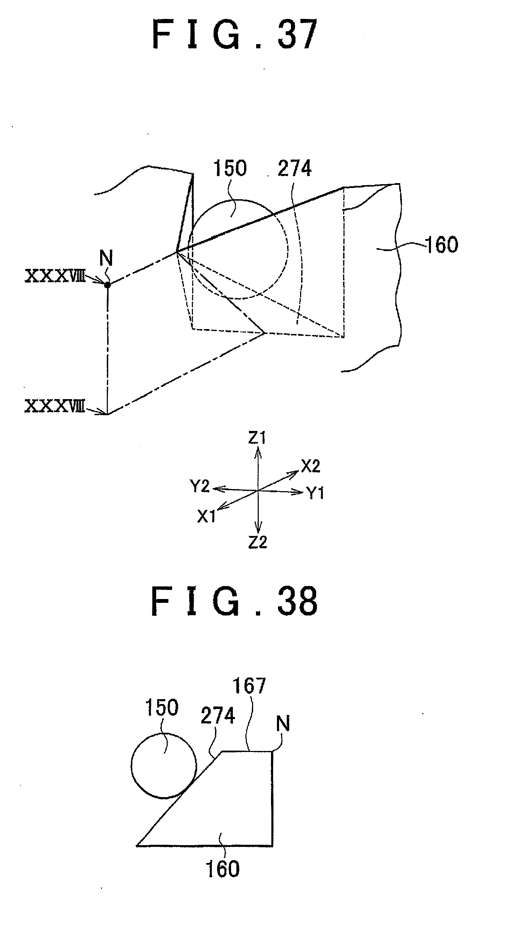

FIG. 37 is a schematic diagram showing an inclined state of the fourth-speed bevel surface 274, and FIG. 38 is a sectional view taken on line XXXVIII-XXXVIII shown in FIG. 37.

As shown in FIGS. 37 and 38, the fourth-speed bevel surface 274 is inclined so as to approach the shift select lever 103 with increasing distance in the shift direction X2 from the neutral position N. In the select directions Y1, Y2, however, the fourth-speed bevel surface 274 is formed as a flat surface such that the distance thereof to the shift select lever 103 is fixed. That is, the fourth-speed bevel surface 274, too, is inclined so as to approach the shift select lever 103 as the distance from the neutral position N increases.

Therefore, the pressing force by which the lock ball 150 positioned on the fourth-speed bevel surface 274 presses the fourth-speed bevel surface 274 can be decomposed into a component force that presses the select-purpose cam 160 in the shift direction X1, and a component force that presses it in the thickness direction Z2.

Since the lock ball 150 positioned on the fourth-speed bevel surface 274 presses the select-purpose cam 160 in the shift direction X1 as described above, the lock ball 150 and the coil spring 152 are able to assist the operation of shifting to the fourth speed change step, and also restrain the occurrence of rattling in the shift direction.

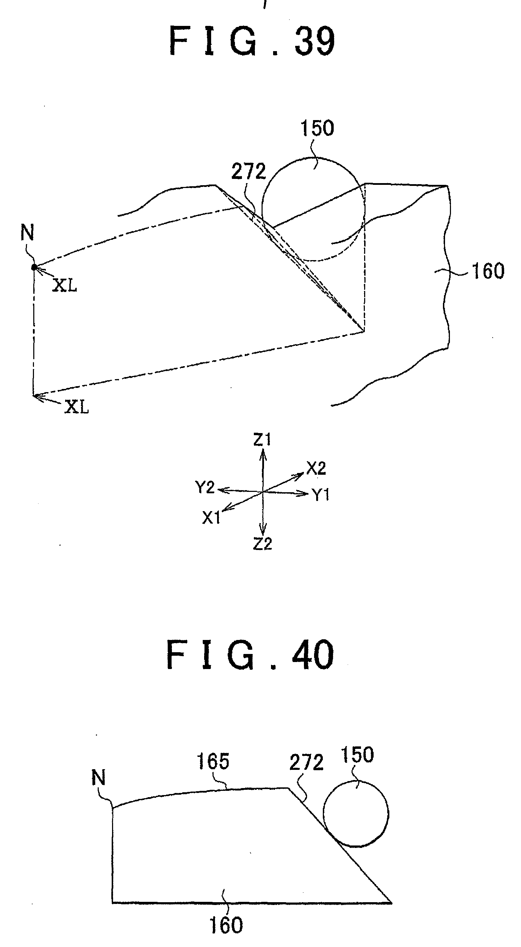

FIG 39 is a schematic diagram showing an inclined state of the second-speed bevel surface 272, and FIG. 40 is a sectional view taken on line XL-XL shown in FIG. 39.

As shown in FIGS. 39 and 40, the second speed-bevel surface 272 is inclined so as to approach the shift select lever 103 with increasing distance in the select direction Y1 from the neutral position N, and is also inclined so as to approach the shift select lever 103 with increasing distance in the shift direction X2 from the neutral position N. That is, the second-speed bevel surface 272, too, is inclined so as to approach the shift select lever 103 as the distance from the neutral position N increases.

Therefore, the pressing force by which the lock ball 150 positioned on the second-speed bevel surface 272 presses the second-speed bevel surface 272 can be decomposed into a component force that presses the select-purpose cam 160 in the shift direction X1, a component force that presses the select-purpose cam 160 in the select direction Y2, and a component force that presses the select-purpose cam 160 in the thickness direction Z2.

Since the lock ball 150 positioned on the second-speed bevel surface 272 presses the select-purpose cam 160 in the shift direction X1 as described above, the lock ball 150 and the coil spring 152 are able to assist the shift operation to the second speed change step, and restrain the occurrence of rattling in the shift directions.

Furthermore, since the second-speed bevel surface 272 supports the lock ball 150 in the select directions Y1, Y2, this construction is able to restrain the occurrence of rattling between the select-purpose cam 160 and the lock ball 150 positioned on the second-speed bevel surface 272.

Thus, in Embodiment 2, the press surface 161 of the select-purpose cam 160, as shown in FIG. 28, includes the select-purpose press surface 162, and the plurality of bevel surfaces that are formed at intervals in the select directions Y1, Y2 (the circumferential direction of the shift select lever 103) on the edge portions that are positioned in the shift directions X1, X2 (the direction of the axis of the shift select lever 103) from the select-purpose press surface 162.

Of these bevel surfaces, the bevel surfaces positioned on the side in the shift direction X1 from the neutral position N are inclined so as to approach the shift select lever 103 with increasing distance in the shift direction X1 from the neutral position N. On the other hand, the bevel surfaces positioned on the side in the shift direction X2 from the neutral position N are inclined so as to approach the shift select lever 103 with increasing distance in the shift direction X2 from the neutral position N.

Furthermore, of the bevel surfaces, the bevel surfaces adjacent to each other in the shift directions X1, X2 are inclined so as to approach the shift select lever 103 with increasing distance in the shift directions X1, X2 from the neutral position N increases.

Thus, since the bevel surfaces are formed in the press surface 161 of the select-purpose cam 160, the lock ball 150 and the coil spring 152 are able to assist the shift operations to the speed change steps, and are also able to restrain the occurrence of rattling between the lock ball 150 and the select-purpose cam 160 after the completion of the shift to any one of the speed change steps. The operation feeling can be further improved.

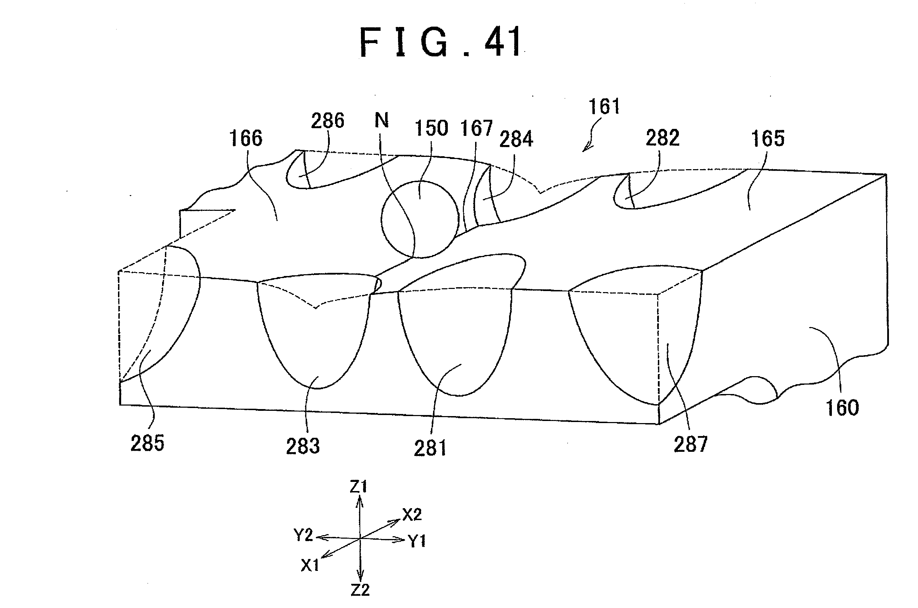

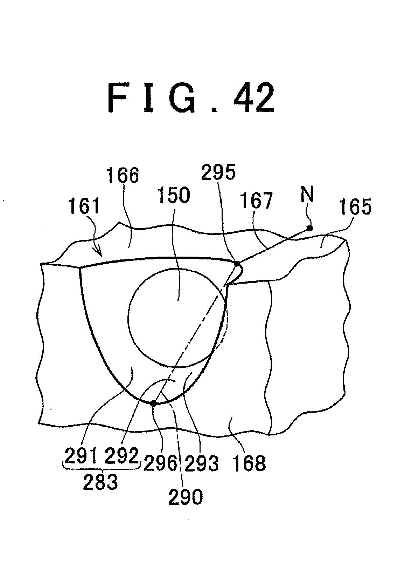

A transmission and a speed ratio change operation device in accordance with Embodiment 3 of the invention will be described with reference to FIGS. 41 and 42. Components, constructions and the like shown in FIGS. 41 and 42 that are the same as or comparable to those shown in FIGS. 1 to 40 are represented by the same reference characters, and descriptions thereof will sometimes be omitted below.

FIG. 41 is a perspective view showing an upper portion of a select-purpose cam 160 that is provided in the transmission in accordance with Embodiment 3. As shown in FIG 41, in a press surface 161 of the select-purpose cam 160, an edge portion positioned in the shift direction X1 has a reverse-speed curved surface 287, a first-speed curved surface 281, a third-speed curved surface 283, and a fifth-speed curved surface 285 that are spaced from each other in the select directions Y1, Y2.

Furthermore, in the press surface 161, an edge portion positioned in the shift direction X2 has a second-speed curved surface 282, a fourth-speed curved surface 284, and a sixth-speed curved surface 286 that are spaced from each other in the select directions Y1, Y2. Each of the curved surfaces is inclined so as to extend toward a shift select lever 103 with increasing distance in the shift direction from the neutral position N.

FIG. 42 is an enlarged perspective view of the third-speed curved surface 283. As shown in FIG 42, an internal surface of the third-speed curved surface 283 has a generally hemi-conical shape such that the inside diameter that defines the third-speed curved surface 283 gradually increases as the distance in the shift direction X1 from an apex portion 295 increases.

The third-speed curved surface 283 reaches an end surface of an upper portion of the select-purpose cam 160 which is positioned in the shift direction X1 from the neutral position N. An opening edge portion 293 of the third-speed curved surface 283 positioned on the end surface 168 is in a generally semi-circular shape.

A bottom portion 290 of the third-speed curved surface 283 extends from the apex portion 295 to a lower end portion 296 of the opening edge portion 293 which is the closest to the shift select lever 103. The bottom portion 296 is inclined so as to become closer to the shift select lever 103 with increasing distance in the shift direction X1 from the neutral position N.

The internal surface of the third-speed curved surface 283 is composed of a half-side curved surface 291 positioned on a select direction Y1 side of the bottom portion 290, and a half-side curved surface 292 positioned on the select direction Y2 side thereof.

During a process in which the driver operates the speed ratio change operating lever 250 to shift to the third speed change step, a lock ball 150 moves from the neutral position N, and enters into the third-speed curved surface 283 through the apex portion 295.

Then, the lock ball 150 moves along the bottom portion. 290, and completes the shift to the third speed change step. In this state, the lock ball 150 is supported by the half-side curved surface 291 and the half-side curved surface 292, and is thus restrained from deviating in position in the select directions Y1, Y2. Therefore, this transmission is able to restrain the occurrence of rattling between the lock ball 150 and the select-purpose cam 160 during a shift operation process, and also improve the operation feeling in the shift operation. While the third-speed curved surface 283 has been described, it is to be noted that the other curved surfaces are also formed in the same manners.

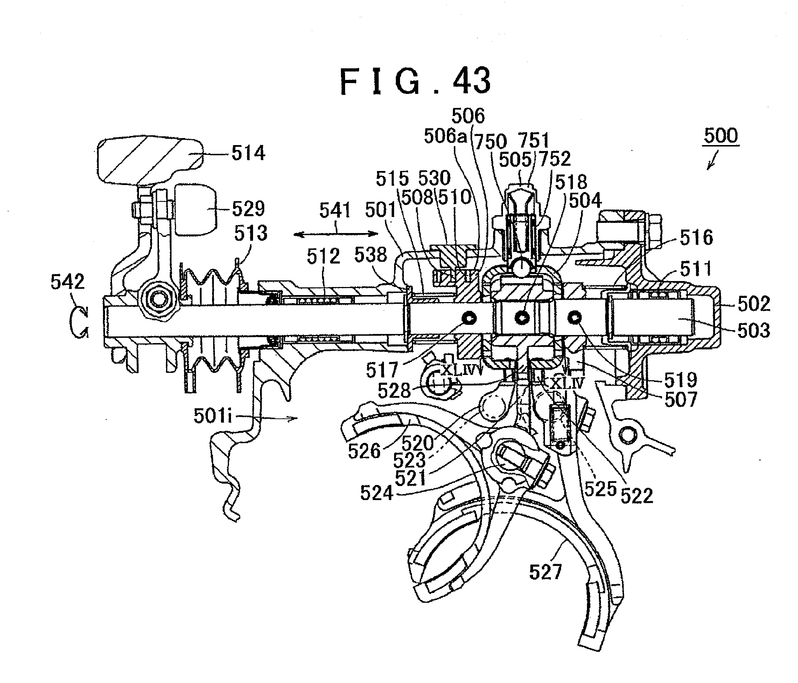

Although in Embodiments 1 to 3 the invention is applied to FR-type manual transmissions, the invention can also be applied to FF-type manual transmissions. With reference to FIGS. 43 to 46, a construction in which the invention is applied to an FF-type manual transmission will be described.

FIG. 43 is a sectional view of a manual transmission in accordance with Embodiment 4 of the invention. With reference to FIG. 43, a manual transmission 500 has a transmission case 501 as a casing, a control cover 502 that is attached to an end portion of the transmission case 501, and a shift select lever 503 that extends through an interior of the transmission case 501 and that are slidable in directions shown by arrows 5 and also pivotable in directions shown by arrows 542.

The manual transmission 500 is a device that transmits the rotation speed and the rotation torque of an engine to driving wheels while changing the speed and the torque according to the state of running of the motor vehicle. The transmission case 501 that constitutes a main body of the manual transmission 500 is made of a metal, and various component parts are attached to the transmission case 501. The transmission case 501 has an internal space 501i. The control cover 502 is bolted to the transmission case 501 so as to seal the internal space 501i.

The shift select lever 503 is disposed in the internal space 501i so that the shift select lever 503 is retained by the transmission case 501 and the control cover 502. The shift select lever 503 is retained on the control cover 502 via a slide ball bearing 511, and is also retained on the transmission case 501 via a slide ball bearing 512. The shift select lever 503 is bar-shape member, and is disposed penetrating through the transmission case 501.

The slide ball bearings 511, 512 retain the shift select lever 503 slidably in the directions shown by arrows 5 and pivotably in the directions shown by the arrows 542. Therefore, the shift select lever 503 can be slid in the internal space 501i, and can also be pivoted therein. When the shift select lever 503 moves, various component members attached to the shift select lever 503 move as well.

A portion of the shift select lever 503 that is protruded from the transmission case 501 is covered with a boot 513 made of rubber. The boot 513 performs a role of protecting the end portion of the shift select lever 503 and preventing intrusion of external dust or moisture into the internal space 501i. Since the shift select lever 503 slides in the directions shown by the arrows 5, the boot 513 is provided expandable and contractible in the directions shown by the arrows 5 so as to absorb amounts of slide of the shift select lever 503.

A shift outer lever 529 is attached to an end portion of the shift select lever 503. The shift outer lever 529 and a mechanism (not shown) are interlinked by a predetermined cable, which is connected also to a speed ratio change operating lever. Therefore, the movement of the speed ratio change operating lever is transmitted to the shift select lever 503 by the shift outer lever 529 and the mechanism via the cable, sliding and pivoting the shift select lever 503.

In Embodiment 4, the manual transmission 500 is of a so-called remote control-type manual transmission that is apart from the speed ratio change operating lever that a driver of the vehicle operates, and is linked therewith by a cable, a link, etc. However, the invention is not limited to this construction, but may also be applied to a so-called direct control-type manual transmission.

Besides, as for the remote control system, the position of the speed ratio change operating lever is not particularly limited. That is, it is possible to adopt various systems, for example, a column shift system in which a speed ratio change operating lever is attached to a steering column portion, and a floor shift system in which a speed ratio change operating lever is attached to a floor, as well as other systems.

A master damper 514, that is, a shift assist mechanism, is attached to an end portion of the shift select lever 503. The master damper 514 serves to assist the application of load to the shift select lever 503 in the shift (rotation) directions, so that the gear meshing in the transmission can be smoothly performed and vibrations that are caused in various portions by metal contact during shifts can be prevented from being transmitted into the cabin.

An inner lever No. 1 (first inner lever 528) is fixed to the shift select lever 503. The first inner lever 528 is fixed to the shift select lever 503 by a slotted pin 518, and slides together with the shift select lever 503 in the directions shown by the arrows 541 and pivots therewith in the directions shown by the arrows 542. The first inner lever 528 is capable of engaging with any one of three shift heads 520, 521, 522 and sliding it in predetermined directions.

In FIG. 43, the first inner lever 528 is engaged with the third/fourth speed-purpose shift head 521 that is located between the other two shift heads. The first inner lever 528 is in contact with a lock ball assembly 505. The lock ball assembly 505 is a member provided for defining the positions of the first inner lever 528 for the speed change steps. The lock ball assembly 505 is fixed to the transmission case 501. This lock ball assembly 505 includes a support member that is slidably inserted into a hole portion formed in the transmission case 501, a lock ball 750 rotatably supported on a distal end portion of the support member, a coil spring 752 that presses the lock ball 750 to an upper surface of the first inner lever 528 via the support member, and a cap 751 that closes an opening portion of the hole portion formed in the transmission case 501 and supports an upper end portion of the coil spring 752.

An interlock plate 504 is fitted to the shift select lever 503 so as to cover the first inner lever 528. The interlock plate 504 is fitted to an outer periphery of the shift select lever 503, and is freely rotatable relative to the shift select lever 503.

The interlock plate 504 is in contact with the first inner lever 528, and restricts the movement of the interlock plate 504 in the slide directions (the movements in the directions of the arrows 541). Therefore, if the shift select lever 503 moves in either one of the directions shown by the arrows 541, the first inner lever 528 and the interlock plate 504 also move in the same direction.

As for the pivoting directions shown by the arrows 542, the interlock plate 504 does not follow the pivot of the shift select lever 503, and is able to carry out an action that is different from that of the shift select lever 503.

The interlock plate 504 is a double-mesh preventative device that performs a function of preventing the first inner lever 528 from selecting two shift heads. In FIG. 43, the two flanking shift heads 520, 522 are held by the interlock plate 504, and therefore can be prevented from being driven by the first inner lever 528.

An inner lever No. 2 (second inner lever 506) is fixed by a slotted pin 517 so as to be adjacent to the interlock plate 504. The second inner lever 506 as a gate plate has a donut shape with a hole opening in a central portion. The shift select lever 503 is fitted into the hole. The second inner lever 506 is urged by a high-side select spring 515.

The high-side select spring 515 is in contact with a select spring seat 538 and a second inner lever 506, and urges the second inner lever 506 and the shift select lever 503 in a direction away from the select spring seat 538. The high-side select spring 515 is constructed of a coil spring.

A select inner lever 507 is provided on a side opposite from the second inner lever 506. The select inner lever 507 receives therein the shift select lever 503, and is fixed to the shift select lever 503 by a slotted pin 519. The select inner lever 507 is in contact with a low-side select spring 516. The low-side select spring 516 is in contact with a select spring seat. The low-side select spring 516 urges the select inner lever 507 and the shift select lever 503 in a direction away from the select spring seat.

A support portion 530 for supporting a gate pin 508 that is an engagement portion is attached to the transmission case 501. The support portion 530 may be screwed into the transmission case 501, or may instead be pressingly inserted into the transmission case 501 as well. The gate pin 508 is a pin-shape portion at a distal end of the support portion 530.

A plurality of gate grooves 510 are formed in a surface of the second inner lever 506. The gate grooves 510 have a shape that is in accordance with the shift gate patter of the manual transmission. At the time of a speed ratio change to any speed change step, the gate pin 508 of the support portion 530 fits into a corresponding one of the gate grooves 510. This makes it possible to prevent the rattling of the shift select lever 503 in the select directions (the directions shown by the arrows 541) after the shifting.

The first/second speed-purpose shift head 522 retains a first/second-speed fork shaft 525. The third/fourth speed-purpose shift head 521 retains a third/fourth speed-purpose fork shaft 524. The fifth speed/reverse-purpose shift head 520 retains a fifth speed/reverse-purpose fork shaft 523. The fork shafts 523, 524, 525 extend parallel to each other. The extending direction of the fork shafts 523, 524, 525 is substantially perpendicular to the extending direction of the shift select lever 503, and is substantially parallel to the rotation shaft (crank shaft) of the engine.

The fork shaft 524 retains the third/fourth speed-purpose shift fork 526. The fork shaft 525 retains the first/second-speed ratio change fork 527. Each of the shift forks 526, 527 has a hub sleeve, and moves its hub sleeve in the forward and backward directions to carry out a speed ratio change. That is, the manual transmission 500 in accordance with Embodiment 4 of the invention is a constant mesh-type manual " transmission that employs a synchromesh mechanism. Incidentally, as the synchromesh mechanism, various types of mechanisms, including a key type, a servo type (Porsche type), a pin type, a constant load type, etc., can be employed.

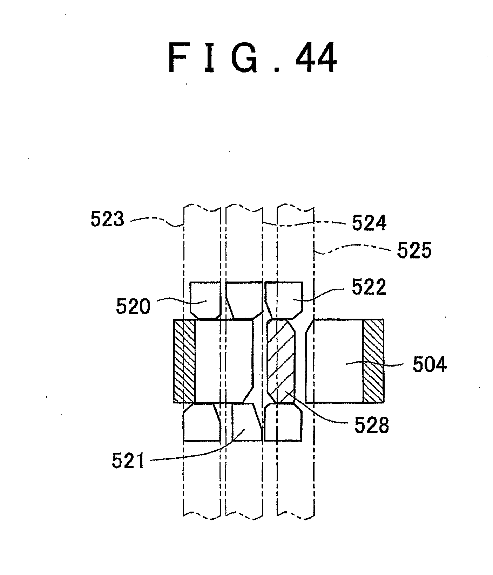

FIG. 44 is a sectional view taken along line XLIV-XLIV in FIG 43. Referring to FIG. 44, a central portion of the interlock plate 504 has a notch. The first inner lever 528 is fitted into the notch.

The first inner lever 528 is able to engage with any one of the shift heads 520 to 522 and slide the engaged one of the shift heads 520 to 522 in the extending direction of the fork shafts 523 to 525. As the engaged shift head 520 to 522 slides, a corresponding one of the fork shafts 523 to 525 linked to the shift head 520 to 522 also slide.

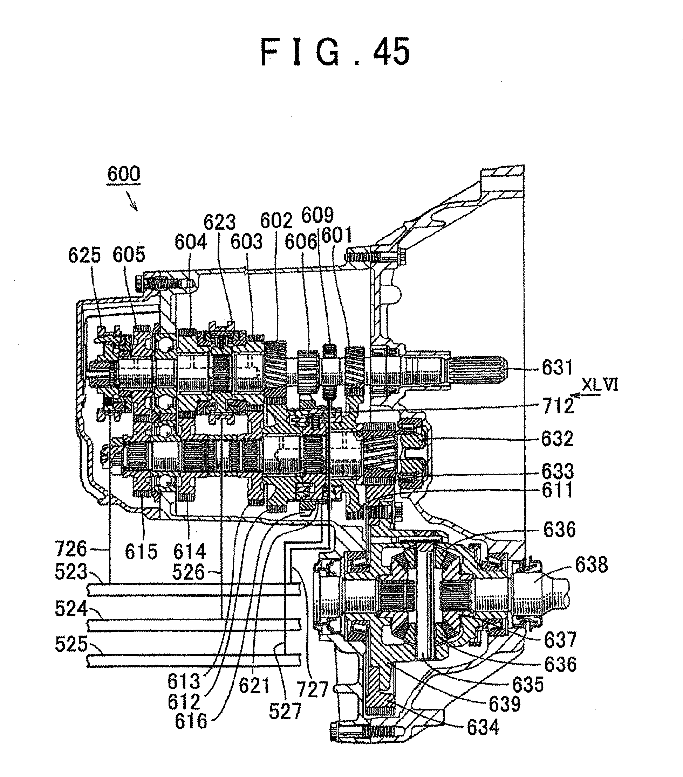

FIG. 45 is a sectional view of a transmission linked to the fork shafts. Referring to FIG. 45, a transmission 600 has an input shaft 631, a first drive gear 601, a second drive gear 602, a third drive gear 603, a fourth drive gear 604, a fifth drive gear 605, and a reverse drive gear 606 that are attached to the input shaft 631. The first drive gear 601 and the second drive gear 602 are fixed to the input shaft 631, and rotate together with the input shaft 631.

On the other hand, the third drive gear 603, the fourth drive gear 604 and the fifth drive gear 605 are freely rotatable relative to the input shaft 631. By sliding hub sleeves 623, 625 of a predetermined synchromesh mechanism, the third drive gear 603, the fourth drive gear 604 and the fifth drive gear 605 combine with the input shaft 631. The output of the engine is transmitted to the input shaft 631 via a clutch. The input shaft 631 is rotatable.

The output shaft 632 is provided with a first driven gear 611, a second driven gear 612, a third driven gear 613, a fourth driven gear 614, a fifth driven gear 615, and an output gear 633. The output gear 633, the third driven gear 613, and the fourth driven gear 614 are fixed to an output shaft 632, and rotate together with the output shaft 632.

On the other hand, the first driven gear 611, and the second driven gear 612 are freely rotatable relative to the output shaft 632. By sliding a hub sleeve 621, the first driven gear 611 or the second driven gear 612 is selectively meshed with the output shaft 632 to rotate together with the output shaft 632.

The reverse driven gear 616 is attached at an outer periphery of the hub sleeve 621. A reverse idler gear 609 is capable of intervening between the reverse drive gear 606 and the reverse driven gear 616. During a usual travel (forward travel), the reverse idler gear 609 is engaged with neither one of the reverse drive gear 606 and the reverse driven gear 616.

However, during a reverse (backward travel), the reverse idler gear 609 becomes engaged with the reverse drive gear 606 and the reverse driven gear 616, so that the rotation of the input shaft 631 is transmitted to the output shaft 632 by way of the reverse drive gear 606, the reverse idler gear 609 and the reverse driven gear 616.

The first drive gear 601 and the first driven gear 611 provide the first speed, and the second drive gear 602 and the second driven gear 612 provide the second speed. The third drive gear 603 and the third driven gear 613 provide the third speed, and the fourth drive gear 604 and the fourth driven gear 614 provide the fourth speed, and the fifth drive gear 605 and the fifth driven gear 615 provide the fifth speed.

The fork shaft 523 is connected to the hub sleeve 625 of the fifth-speed synchromesh mechanism, and the reverse idler gear 609, by the shift forks 526, 527. By the fork shaft 523 sliding in the direction of the length thereof, the hub sleeve 625 actuates the fifth-speed synchromesh mechanism so as to connect the fifth drive gear 605 to the input shaft 631, or causes the reverse idler gear 609 to engage with both the reverse drive gear 606 and the reverse driven gear 616.

The fork shaft 524 is connected to a hub sleeve 623 of the third-speed synchromesh mechanism and the fourth-speed synchromesh mechanism by the shift fork 526. By sliding the fork shaft 524 in the lengthwise direction of thereof, the hub sleeve 623 actuates the third-speed or fourth-speed synchromesh mechanism. Therefore, either the third drive gear 603 or the fourth drive gear 604 rotates together with the input shaft 631.

The fork shaft 525 is connected to the hub sleeve 621 of the first-speed and second-speed synchromesh mechanisms by the shift fork 527. By sliding the fork shaft 525 in the lengthwise direction thereof, the hub sleeve 621 meshes with the first-speed or second-speed synchromesh mechanism. Therefore, either the first driven gear 611 or the second driven gear 612 rotates together with the output shaft 632.

The output gear 633 is in mesh with a ring gear 634 of an actuation device. The ring gear 634 is fixed to a differential case 639, so that the differential case 639 and the ring gear 634 rotate together. In the differential case 639, pinions 636 are retained by a pinion shaft 635 so as to be rotatable about their own axes and also revolvable. The pinions 636 are in mesh with a pair of side gears 637. An output member 638 is spline-connected to the side gears 637. The turning force output from the output member 638 is transmitted to tires through a drive shaft.

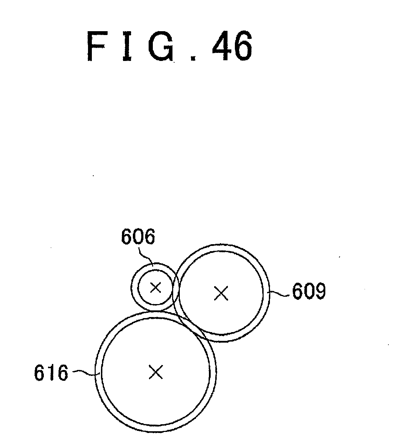

FIG. 46 is a schematic diagram of the reverse gear viewed in a direction shown by an arrow XLUI in FIG. 45. Referring to FIG. 46, the reverse-purpose gear is constructed of the reverse drive gear 606, the reverse idler gear 609, and the reverse driven gear 616. The reverse drive gear 606 and the reverse driven gear 616 rotate together with the input shaft 631 and the output shaft 632, respectively.

On the other hand, the reverse idler gear 609 is cut off from the reverse drive gear 606 and the reverse driven gear 616, and therefore is not rotated during the forward travel of the vehicle. During the reverse travel (backward travel), the reverse idler gear 609 is meshed with the reverse drive gear 606 and the reverse driven gear 616, so that the reverse drive gear 606 and the reverse driven gear 616 are rotated in the same direction.

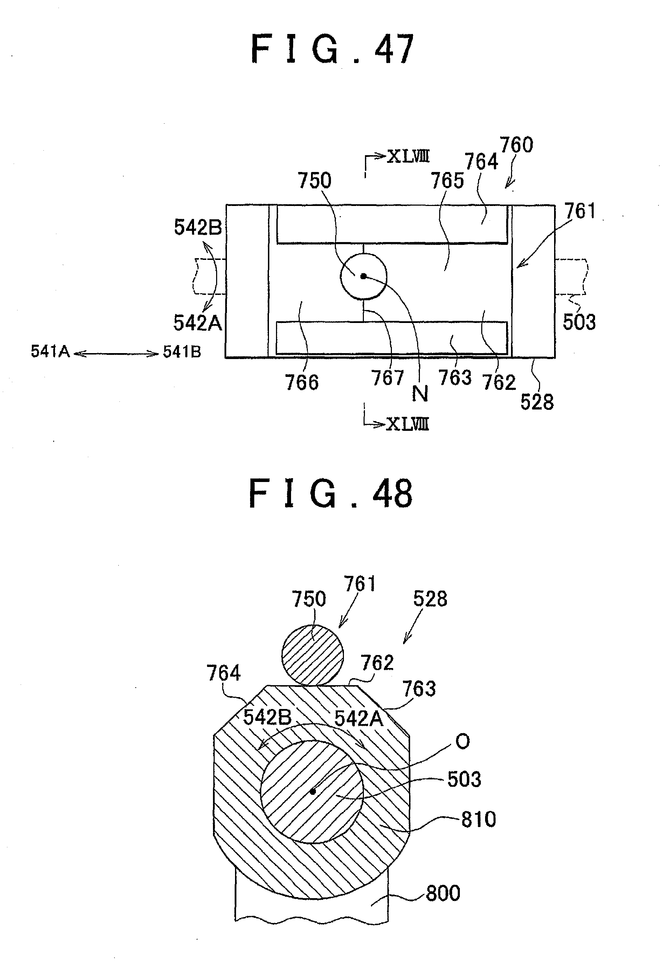

FIG. 47 is a plan view of the first inner lever 528. As shown in FIG 47, an upper surface of the first inner lever 528 is formed as a press surface 761 that is pressed by the lock ball 750.

When a driver operates the speed ratio change operating lever in a select direction, the shift select lever 503 is displaced in a corresponding one of select directions 541A, 541B. Then, when the driver operates the speed ratio change operating lever in a shift direction, the shift select lever 503 rotates in a corresponding one of shift directions 542A, 542B.

That is, in this manual transmission, the shift directions of the shift select lever 503 are the circumferential directions of the shift select lever 503, and the select directions of the shift select lever 503 are the directions of the axis of the shift select lever 503.

The press surface 761 includes a select-purpose press surface 762 that is positioned at a central portion thereof in the circumferential direction of the shift select lever 503, and that extends in the shift select lever 503, and bevel surfaces 763, 764 that are formed at locations adjacent to the select-purpose press surface 762 in the circumferential direction of the shift select lever 503.

The select-purpose press surface 762 has a recess portion 767, and curved surfaces 765, 766 that are formed at locations adjacent to the recess portion 767 in the directions of the axis of the shift select lever 503.

In the neutral state, the lock ball 750 is positioned at a neutral position N that is positioned in a center portion of the recess portion 767. Each of the curved surfaces 765, 766 is curved so as to become further apart from the rotation center O of the shift select lever 503 with increasing distance in the direction of the axis of the shift select lever 503 from the recess portion 767.

When the driver operates the speed ratio change operating lever in a select direction, the shift select lever 503 and the first inner lever 528 are displaced in the select direction 541A or the select direction 541B. Thus, the lock ball 750 is located on either the curved surface 765 or the curved surface 766. Since each of the curved surface 765 and the curved surface 766 is curved as described above, the pressing of the lock ball 750 on the curved surface 765 or the curved surface 766 displaces the first inner lever 528 and the shift select lever 503 in the select direction 541A or the select direction 541B so that the lock ball 750 comes to the recess portion 767. This achieves a select characteristic of returning to the neutral state when the speed ratio change operating lever is operated in either one of the select directions, in this manual transmission, too.

FIG. 48 is a sectional view taken on line XLVIII-XLVIII shown in FIG. 47. As shown in FIG. 48, the first inner lever 528 is provided with a tube portion 810 that defines a penetration hole that receives therein the shift select lever 503, and an engagement portion 800 that is protruded from the tube portion 810 and that engages with the shift heads 520, 521, 522.

The press surface 761 is formed in an upper surface of the tube portion 810, and the engagement portion 800 is formed on a portion of the peripheral surface of the tube portion 810 that is opposite from the press surface 761.

The bevel surface 763 is inclined so as to approach the shift select lever 503 with increasing distance from the neutral position N in the shift direction 542A. The bevel surface 764 is inclined so as to approach the shift select lever 503 with increasing distance from the neutral position N in the shift direction 542B.

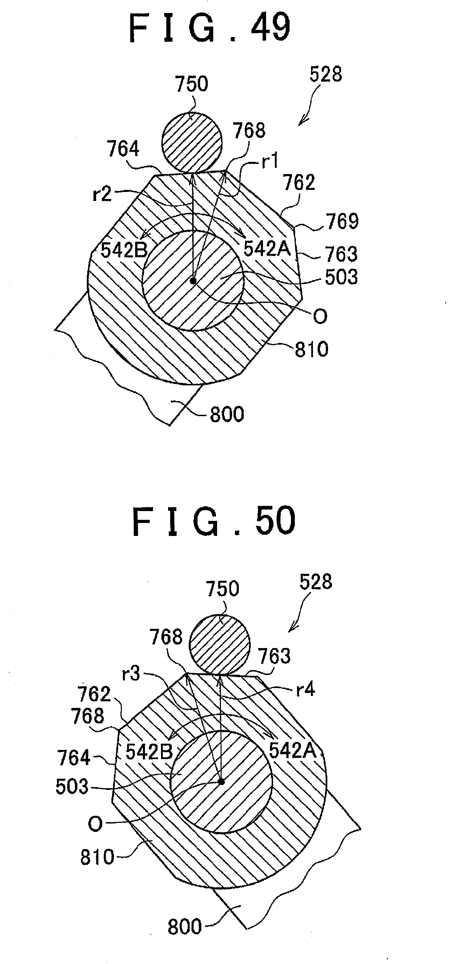

FIG. 49 is a sectional view of the first inner lever 528 and the shift select lever 503 after the first inner lever 528 and the shift select lever 503 are rotated in the shift direction 542A from the state shown in FIG. 48.

As shown in FIG. 49, the bevel surface 764 is inclined so that the distance of a point on the bevel surface 764 from the rotation center O of the shift select lever 503 lessens as the point is moved from a ridge line 768 between the bevel surface 764 and the select-purpose press surface 762 into an interior of the bevel surface 764.

Concretely, the distance r2 between the rotation center O and a center point of the bevel surface 764 in the width direction is less than the distance r1 between the rotation center O and the ridge line 768.

Therefore, when the lock ball 750 reaches the bevel surface 764 as the shift select lever 503 and the first inner lever 528 are rotated in the shift direction 542A, the first inner lever 528 and the shift select lever 503 are rotated in the shift direction 542A by the pressing force from the lock ball 750.

Thus, the lock ball 750 and the coil spring 752 are able to assist the driver in operating the speed ratio change operating lever in the shift directions, and restrain the occurrence of rattling in the shift directions. Therefore, the operation feeling of the shift operation is improved.

FIG 50 is a sectional view of the shift select lever 503 and the first inner lever 528 after the shift select lever 503 and the first inner lever 528 are rotated from the state shown in FIG. 48 in the shift direction 542B.

As shown in FIG. 50, the bevel surface 763 is inclined so that the distance of a point on the bevel surface 763 from the rotation center O of the shift select lever 503 lessens as the point is moved in the shift direction 542A from a ridge line 769 that is defined by the bevel surface 763 and the select-purpose press surface 762.

Concretely, the distance r4 between the rotation center O and a central portion of the bevel surface 763 in the width direction is shorter than the distance r3 between the rotation center O and the ridge line 769.

Therefore, when the lock ball 750 reaches the bevel surface 763 as the shift select lever 503 and the first inner lever 528 rotate in the shift direction 542B, the first inner lever 528 and the shift select lever 503 are rotated in the shift direction 542B by the pressing force from the lock ball 750.

Thus, the driver's shift operation is assisted by the lock ball 750 and the coil spring 752, so that the operation feeling in the shift operation will be improved.

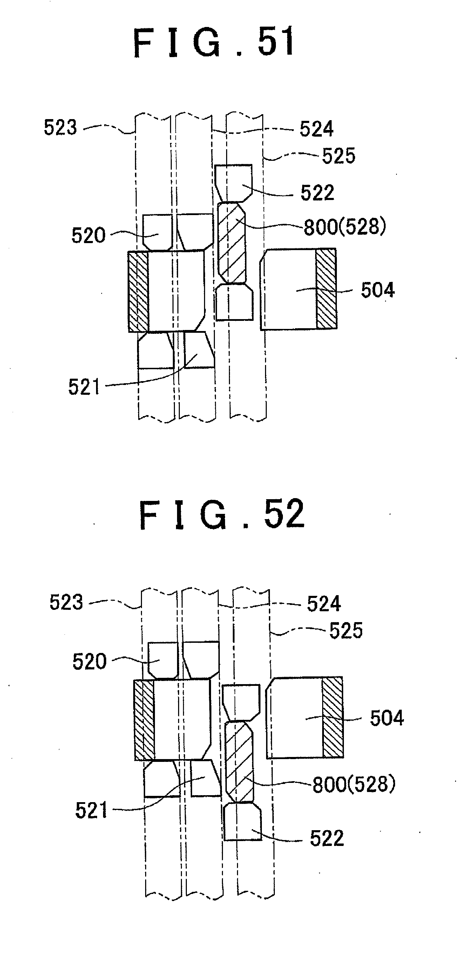

Next, the speed ratio change action of the manual transmission shown in FIG. 43 will be described. FIG. 51 is a sectional view of the interlock plate 504 and the first inner lever 528 at the time of the shift to the first speed change step. Referring to FIG. 51, when a shift to the first speed change step is to be made, the shift select lever 503 is operated, so that the interlock plate 504 and the first inner lever 528 move, and the first inner lever 528 engages with the first/second speed-purpose shift head 522. The first inner lever 528 having been engaged with the shift head 522 moves upward in FIG. 51.

Thus, in a process of shifting to the first speed change step, the shift select lever 503 and the first inner lever 528 are rotated from the state shown in FIG. 48 to the state shown in FIG. 49.

Then, when the lock ball 750 reaches the bevel surface 764, the shift operation is assisted, and the occurrence of rattling in the shift directions can be restrained.

Herein, the fork shafts 523, 524, 525, extending substantially parallel to each other, are connected to the shift head 520, 521, 522, respectively. If the shift head 522 moves, the movement is transmitted to the fork shaft 525, so that the fork shaft 525 moves the hub sleeve 621 shown in FIG. 45 by the shift fork 527. Thus, the speed ratio change to the first speed change step can be performed.

FIG 52 is a sectional view of the interlock plate 504 and the first inner lever 528 at the time of the shift to the second speed change step. Referring to FIG. 52, at the time of the shift to the second speed change step, the first inner lever 528 engages with the shift head 522. While this state is maintained, the first inner lever 528 moves the shift head 522 downward in FIG. 52. Therefore, the fork shaft 525 linked to the shift head 522 moves downward in FIG. 52. In association with this movement, the fork shaft 525 moves the hub sleeve 621 shown in FIG. 45, via the shift fork 527, whereby the speed ratio change to the second speed change step is executed.

At the time of the shift operation to the second speed change step, the shift select lever 503 and the first inner lever 528 rotate from the state shown in FIG. 48 to the state shown in FIG. 50. Therefore, the lock ball 750 and the coil spring 752 assist the shift operation, and can restrain the occurrence of rattling in the shift directions. Hence, the operation feeling in shift operations is improved.

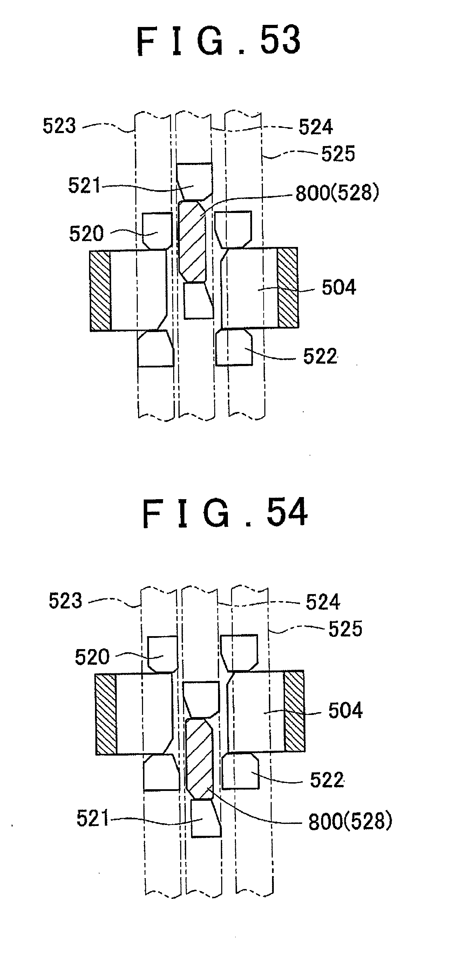

FIG. 53 is a sectional view of the interlock plate 504 and the first inner lever 528 at the time of the shift to the third speed change step. Referring to FIG 53, at the time of the shift to the third speed change step, the shift select lever 503 is operated so that the interlock plate 504 and the first inner lever 528 select the shift head 521, and the first inner lever 528 engages with the shift head 521. As the shift select lever 503 pivots, the first inner lever 528 moves the shift head 521 in an upward direction in FIG. 53. In association with this, the fork shaft 524 is also moved, and the fork shaft 524 moves the hub sleeve 623 shown in FIG. 45, by the shift fork 526. In consequence, the shift to the third speed change step is completed. As described above, as the lock ball 750 reaches the bevel surface 764, the shift operation is assisted, and the occurrence of rattling in the shift directions can be restrained.

FIG. 54 is a sectional view of the interlock plate 504 and the first inner lever 528 at the time of the shift to the fourth speed change step. Referring to FIG. 54, at the time of the shift to the fourth speed change step, the shift head 521 is moved downward in FIG. 54. Therefore, the fork shaft 524 linked to the shift head 521 also moves, moving the hub sleeve 623 shown in FIG 45 via the shift fork 526. In consequence, the shift to the fourth speed change step is executed. At the time of the shift to the fourth speed change step, the shift select lever 503 and the first inner lever 528 are rotated from the state shown in FIG. 48 to the state shown in FIG. 50. Therefore, as described above, the lock ball 750 and the coil spring 752 assist the shift operation, and can restrain the occurrence of rattling in the shift directions. Thus, the operation feeling of the shift operation will be improved.

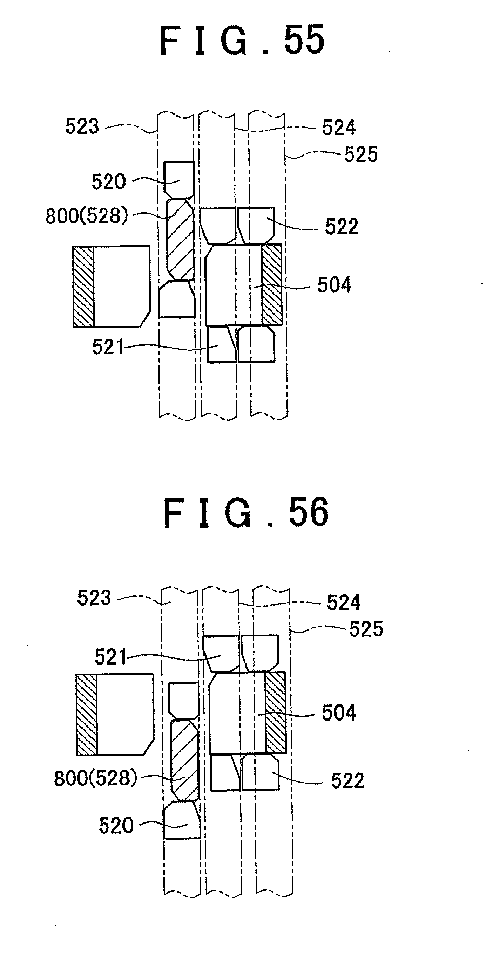

FIG 55 is a sectional view of the interlock plate 504 and the first inner lever 528 at the time of the shift to the fifth speed change step. Referring to FIG. 55, at the time of the shift to the fifth speed change step, the shift select lever 503 is operated so that the interlock plate 504 and the first inner lever 528 select the shift head 520. The first inner lever 528 engages with the shift head 520. As the first inner lever 528 moves the shift head 520 upward in FIG. 55, the fork shaft 523 also moves. In association with this movement, the fork shaft 523 moves the hub sleeve 625 shown in FIG. 45 via the shift fork 526, whereby the speed ratio change to the fifth speed change step is completed. As described above, as the lock ball 750 reaches the bevel surface 764, the shift operation is assisted, and the occurrence of rattling in the shift directions can be restrained.

FIG 56 is a sectional view of the interlock plate 504 and the first inner lever 528 in a state where the shift to the reverse speed has been completed. Thus, at the time of the shift to the reverse speed, the shift select lever 503 and the first inner lever 528 are rotated from the state shown in FIG. 48 to the state shown in FIG. 50. Therefore, as described above, the lock ball 750 and the coil spring 752 assist the shift operation, and will improve the operation feeling of the shift operation, and can restrain the occurrence of rattling in the shift directions.

While embodiments of the invention have been described above, it should be understood that all the embodiments disclosed herein are merely illustrative in all respects, and are not restrictive. The technical scope of the invention is shown by the claims for patent, and it is intended that all changes within the meaning and scope equivalent to the claims for patent be included. Furthermore, the aforementioned numerical values and the like are merely illustrative, and the aforementioned numerical values and ranges are not restrictive.
A speed ratio change operation device includes: a case (101); a shift select lever (103) housed in the case (101) and provided slidably in a direction of an axis and rotatably in a circumferential direction; a speed ratio change operating lever (250) that operates the shift select lever (103); a select-purpose cam (160) that is fixed to the shift select lever (103) and rotates about the shift select lever (103); a lock ball (150) that presses the select-purpose cam (160); and a bevel portion (163, 164) that is formed in an end portion of a press surface (162, 163, 164) of the select-purpose cam (160) which is pressed by the lock ball (150), the end portion being positioned in a shift displacement direction in which the shift select lever (103) is displaced at the time of a shift operation. The bevel portion is inclined so that a point on the bevel portion approaches the shift select lever (103) as the point is moved in the shift displacement direction. Thus, the operation feeling of the shift operation can be improved.

## Claims

1. A speed ratio change operation device comprising:
a case (101, 501);
a shift select lever (143, 503) that is housed in the case (101, 501) and that is provided slidably in a direction of an axis and that rotates in a circumferential direction;
an operation portion that operates the shift select lever (103, 503);
a cam member (160) that is fixed to the shift select lever (103, 503) and that rotates about the shift select lever (103, 503);
a press portion (105, 505) that presses the cam member (160); and
a bevel portion (163, 164; 763, 764) that is formed in an end portion of a pressed
surface (161, 761) of the cam member (160) which is pressed by the press portion (105, 505), the end portion being positioned in a shift displacement direction in which the shift select lever (103, 503) is displaced at a time of a shift operation, the bevel portion being inclined so that a point on the bevel portion approaches the shift select lever (103, 503) as the point is moved in the shift displacement direction.

2. The speed ratio change operation device according to claim 1, **characterized in that**
the shift select lever (103, 503) is displaced in a direction of an axis of the shift select lever (103, 503) at the time of the shift operation, and the bevel portion (163, 164; 763, 764) is formed in the end portion of the pressed surface (161, 761) which is positioned in the direction of the axis of the shift select lever (103, 503).

3. The speed ratio change operation device according to claim 2, **characterized in that**
the bevel portion (163, 164; 763, 764) extends in a circumferential direction of the shift select lever (103, 503).

4. The speed ratio change operation device according to claim 2, **characterized in that**
the bevel portion (271-277; 281-287) is provided at each of a plurality of locations that are spaced from each other in the circumferential direction of the shift select lever (103, 503).

5. The speed ratio change operation device according to claim 4, **characterized in that**
the pressed surface (161, 761) includes a recess portion (167, 767) that holds the press portion (105, 505) during a neutral state, and, of the plurality of bevel portions, a bevel portion (271-277; 281-287) formed with a deviation from the recess portion in the circumferential direction of the shift select lever (103, 503) is inclined so that a point on the bevel portion approaches the shift select lever (103) as the point is moved in the circumferential direction from the recess portion.

6. The speed ratio change operation device according to claim 5, **characterized in that**
the bevel portion (271-277) includes a flat surface.

7. The speed ratio change operation device according to claim 5, **characterized in that**
the bevel portion (281-287) includes a curved surface.

8. The speed ratio change operation device according to any one of claims 1 through 7,
**characterized in that**
the pressed surface (161, 761) includes a recess portion (167, 767) that holds the press portion (105, 505) during a neutral state, and a portion of the pressed surface (161, 761) which is adjacent to the recess portion in a select direction in which the shift select lever (103, 503) is displaced at a time of a select operation is a curved surface (165, 166; 765, 766) that is curved so that a point on the curved portion becomes further apart from the shift select lever (103, 503) as the point is moved from the recess portion (167, 767) in the select direction.

9. A transmission (100, 500, 600) that comprises the speed ratio change operation device according to any one of claims 1 through 8.
